# EUROPEAN PATENT APPLICATION

(11) **EP 4 768 370 A1**
(43) Date of publication of application: **01.07.2026**
(21) Application number: 24855325.7
(22) Date of filing: 24.04.2024
(51) Int. Cl.: B62D 25/20

(54) **VEHICLE BODY ASSEMBLY OF VEHICLE AND VEHICLE**

(30) Priority: 22.08.2023 CN 202311069700
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: YANG, Bin, Hangzhou, Zhejiang 310051 (CN); SONG, Liqiang, Hangzhou, Zhejiang 310051 (CN); YANG, Yanchao, Hangzhou, Zhejiang 310051 (CN); LI, Guibin, Hangzhou, Zhejiang 310051 (CN); CHEN, Guilun, Hangzhou, Zhejiang 310051 (CN); WANG, Tongling, Hangzhou, Zhejiang 310051 (CN)
(74) Representative: Kraus & Lederer PartGmbB
(86) International application number: PCT/CN2024/089672
(87) International publication number: WO 2025/039595

(57) **Abstract**

Provided are a vehicle body assembly (100) of a vehicle and a vehicle. The vehicle body assembly (100) of the vehicle includes: a main vehicle body (6) having a mounting opening (61); a battery pack (5) disposed at the main vehicle body (6) and covering the mounting opening (61), in which the battery pack (5) is configured to form at least part of a floor of the vehicle body assembly (100); and a plurality of seat mounting cross beams (199). At least part of each of the plurality of seat mounting cross beams (199) is located in the mounting opening (61) and connected to the main vehicle body (6). A plurality of cavities are defined by at least one of the plurality of seat mounting cross beams (199).

## Description

### CROSS-REFERENCE TO RELATED APPLICATION

This application is based on and claims priority to Chinese Patent Application No. 202311069700.1, filed on August 22, 2023, the entire contents of which are incorporated herein by reference.

### FIELD

The present invention relates to the field of vehicles, and more particularly, to a vehicle body assembly of a vehicle and a vehicle including same.

### BACKGROUND

In the related art, a traction battery and a body of a vehicle exist separately as two independent systems and are not connected. Since both the traction battery and the body of the vehicle are relatively heavy, an overall weight of the vehicle is high, which is unfavorable for increasing a driving range of the vehicle.

### SUMMARY

The present invention aims to solve at least one of the technical problems in the related art to some extent.

To this end, embodiments of the present invention are to provide a vehicle body assembly of a vehicle. The vehicle body assembly of the vehicle is conducive to lightweight design of the vehicle and helps increase a driving range of the vehicle.

Further, embodiments of the present invention are to provide a vehicle.

The vehicle body assembly of the vehicle according to the embodiments of the present invention includes: a main vehicle body having a mounting opening; a battery pack disposed at the main vehicle body and covering the mounting opening, in which the battery pack is configured to form at least part of a floor of the vehicle body assembly; and a plurality of seat mounting cross beams. At least part of each of the plurality of seat mounting cross beams is located in the mounting opening and connected to the main vehicle body. A plurality of cavities are defined by at least one of the plurality of seat mounting cross beams.

With the vehicle body assembly of the vehicle according to the embodiments of the present invention, by configuring the battery pack to form the at least part of the floor of the vehicle body assembly, a part of a floor of a conventional vehicle body may be omitted, which is conducive to the lightweight design of the vehicle and helps increase the driving range of the vehicle. Further, by arranging the at least part of each of the plurality of seat mounting cross beams in the mounting opening and enabling the at least one of the plurality of seat mounting cross beams to define the plurality of cavities, an enhancement of structural strength of the vehicle body assembly can be facilitated, helping improve safety of the vehicle.

The vehicle according to embodiments of the present invention includes the above vehicle body assembly of the vehicle.

Additional aspects and advantages of the present invention will be provided at least in part in the following description, or will become apparent at least in part from the following description, or can be learned from practicing of the present invention.

### BRIEF DESCRIPTION OF THE DRAWINGS

FIG. 1 is a schematic view of a vehicle body assembly according to an embodiment of the present invention.
FIG. 2 is an enlarged partial view of a front cross beam for front seat mounting, a side sill beam, and a sealing component according to an embodiment of the present invention.
FIG. 3 is a schematic sectional view of a front cross beam body according to an embodiment of the present invention.
FIG. 4 is a schematic view of a vehicle body assembly according to an embodiment of the present invention.
FIG. 5 is an enlarged partial view of a rear cross beam for front seat mounting, a side sill beam, and a sealing component according to an embodiment of the present invention.
FIG. 6 is a schematic sectional view of a rear cross beam body according to an embodiment of the present invention.
FIG. 7 is a schematic view of a vehicle body assembly according to an embodiment of the present invention, viewed from another perspective.
FIG. 8 is an enlarged view of part A in FIG. 7.
FIG. 9 is a schematic view of a side sill beam according to an embodiment of the present invention.
FIG. 10 is a schematic sectional view of a part of a structure of each of a side sill beam, a battery pack, and a seat mounting cross beam according to an embodiment of the present invention.
FIG. 11 is a schematic sectional view of a side sill beam according to an embodiment of the present invention.
FIG. 12 is a schematic sectional view of a side sill beam according to an embodiment of the present invention.
FIG. 13 is a schematic structural view of a seat mounting cross beam and a reinforcement beam according to an embodiment of the present invention.
FIG. 14 is a schematic sectional view of a part of a structure of a vehicle body assembly according to an embodiment of the present invention.
FIG. 15 is a schematic sectional view of a part of a structure of a vehicle body assembly according to an embodiment of the present invention.
FIG. 16 is a top view of a vehicle body assembly according to an embodiment of the present invention.
FIG. 17 is a bottom view of a vehicle body assembly according to an embodiment of the present invention.
FIG. 18 is a schematic sectional view of a vehicle body assembly according to an embodiment of the present invention.
FIG. 19 is a schematic enlarged view of a part of a structure in FIG. 18.
FIG. 20 is a schematic sectional view of a front bulkhead panel according to an embodiment of the present invention.
FIG. 21 is a schematic sectional view of a left seal according to an embodiment of the present invention.
FIG. 22 is a schematic sectional view of a right seal according to an embodiment of the present invention.
FIG. 23 is a schematic sectional view of a rear seal according to an embodiment of the present invention.
FIG. 24 is a schematic assembled view of a front bulkhead panel and a sealing component according to an embodiment of the present invention (with a connection arm omitted).
FIG. 25 is a schematic assembled view of a sealing component according to an embodiment of the present invention (with a connection arm omitted).

Reference numerals of the accompanying drawings in the specification are as follows:
vehicle body assembly 100; seat mounting cross beam 199;
front cross beam for front seat mounting 1; front cross beam body 10; first mounting portion 101; second mounting hole 1011; front cross beam top wall 102; front cross beam front side wall 103; front cross beam bottom wall 104; first sub-bottom wall 1041; second sub-bottom wall 1042; fillet 1043; first avoidance hole 1044; first connection 1045; front cross beam rear side wall 105; front cross beam cavity 106;
first mounting member 11; third connection flange 111; fourth connection flange 112; avoidance opening 113;
front cross beam connection member 12; fifth connection flange 121; sixth connection flange 122;
rear cross beam for front seat mounting 2; rear cross beam body 20; rear cross beam cavity 201; rear cross beam top wall 202; first sub-top wall 2021; second sub-top wall 2022; rear cross beam front side wall 203; rear cross beam bottom wall 204; second recess 2041; third sub-bottom wall 2042; fourth sub-bottom wall 2043; second connection 2044; rear cross beam rear side wall 205;
second mounting member 21; seventh connection flange 211; eighth connection flange 212; second avoidance hole 213;
rear cross beam connection member 22; ninth connection flange 221; tenth connection flange 222;
side sill beam 40; receiving cavity 41; inner side wall 411; outer side wall 412; reinforcement beam 42; first end 421; second end 422; buffer chamber 423; first cavity 424; partition plate 425;
inner side sill panel 43; inner panel body 431; engagement opening 4311; inner panel connection plate 432;
outer side sill panel 44; outer panel body 441; outer panel connection plate 442;
first connection member 45; first connection plate 451; second connection plate 452; cutout 4521; reinforcing rib 4522; weight-reduction hole 4523;
second connection member 46; main connection member body 461; first plate body 4611; second plate body 4612; third plate body 4613; first connection flange 462; second connection flange 463;
left side sill beam 47; right side sill beam 48; first recess 49;
battery pack 5; assembly space 51; battery pack body 52; battery pack connection portion 53; sealing surface 54; flexible seal 55;
main vehicle body 6; mounting opening 61; front compartment 62; front bulkhead panel 621; rear floor 63; connection member 64; engagement portion 65; component 66; pipeline 661;
sealing component 7; third avoidance hole 71; protrusion structure 72; sealing protrusion 721; left seal 74; connection arm 741; left connection flange 742; rear seal 75; right seal 76; right connection flange 761;
center tunnel 9.

### DETAILED DESCRIPTION

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present invention.

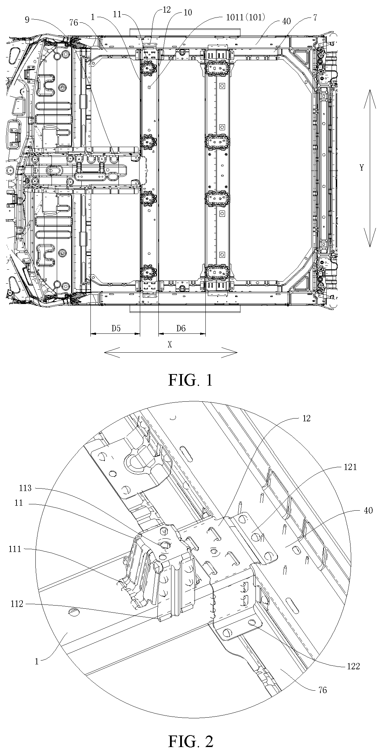

A vehicle body assembly 100 of a vehicle according to embodiments of the present invention will be described below with reference to FIG. 1 to FIG. 23.

As illustrated in FIG. 1 to FIG. 23, the vehicle body assembly 100 of the vehicle according to the embodiments of the present invention includes a main vehicle body 6, a battery pack 5, and a seat mounting cross beam 199.

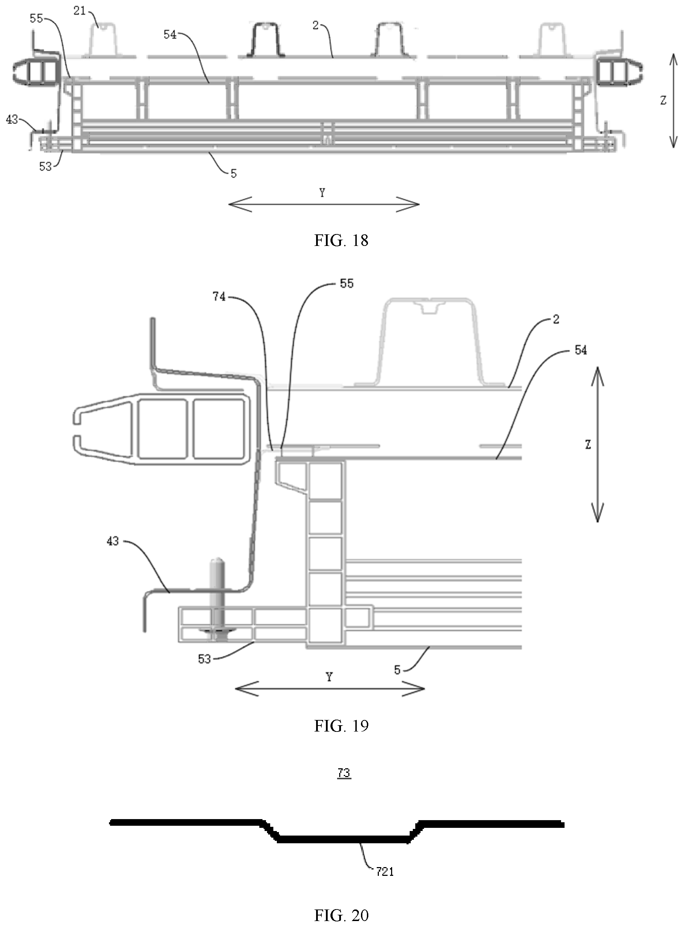

The main vehicle body 6 has a mounting opening 61. The mounting opening 61 is capable of extending through the main vehicle body 6 in a height direction of the vehicle (i.e., a Z direction illustrated in FIG. 18). The battery pack 5 is disposed at the main vehicle body 6 and covers the mounting opening 61. The battery pack 5 is configured to form at least part of a floor of the vehicle body assembly 100. As some optional embodiments of the present invention, at least part of a structure of the battery pack 5 may be located in the mounting opening 61, and an upper cover of the battery pack 5 may be constructed as at least part of the floor of the vehicle body assembly 100. By forming the mounting opening 61 at the main vehicle body 6 and configuring the battery pack 5 to form the at least part of the floor of the vehicle body assembly 100, a part of a floor of a conventional vehicle body can be omitted to reduce a weight of the main vehicle body 6, which is conducive to lightweight design of the vehicle and helps increase a driving range of the vehicle.

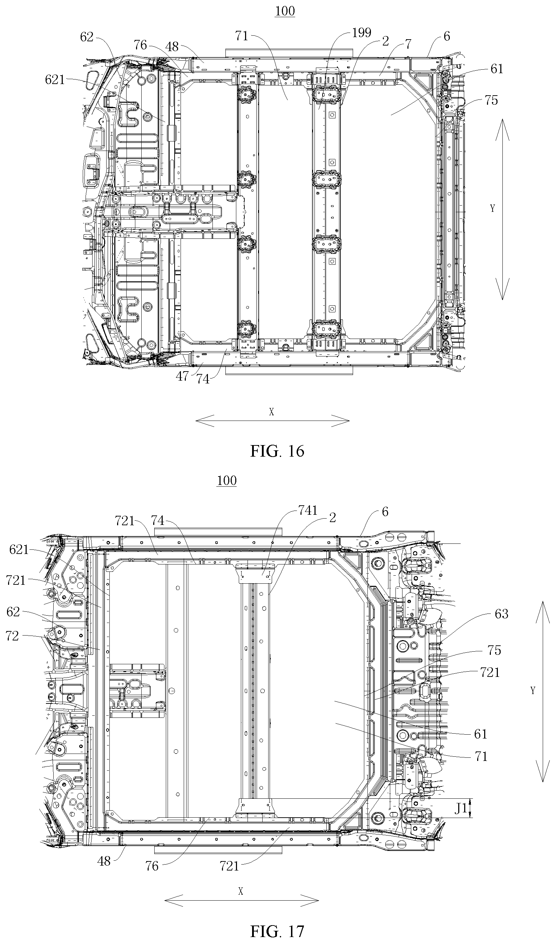

At least part of the seat mounting cross beam 199 is located in the mounting opening 61. The seat mounting cross beam 199 is connected to the main vehicle body 6. As some optional embodiments of the present invention, the seat mounting cross beam 199 may be directly or indirectly connected to the main vehicle body 6. A plurality of seat mounting cross beams 199 are provided. For example, two seat mounting cross beams 199 may be provided. The two seat mounting cross beams 199 may be spaced apart from each other in a length direction of the vehicle (i.e., an X direction illustrated in FIG. 16). Further, a plurality of cavities are defined by at least one of the plurality of seat mounting cross beams 199.

The seat mounting cross beam 199 may extend in a width direction of the vehicle (i.e., a Y direction illustrated in FIG. 16).

It should be noted that, by arranging the at least part of the seat mounting cross beam 199 in the mounting opening 61, the seat mounting cross beam 199 can provide support in the mounting opening 61 when the vehicle experiences a side collision to reduce a degree of crumpling of the mounting opening 61, safeguarding safety of passengers in an occupant compartment. In addition, since the seat mounting cross beam 199 can provide the support in the mounting opening 61, a compression force applied to the battery pack 5 can be reduced, which is conducive to reducing a probability of dangerous situations such as thermal runaway or explosion of the battery pack 5.

Therefore, by configuring the battery pack 5 to form the at least part of the floor of the vehicle body assembly 100, the part of the floor of the conventional vehicle body can be omitted, which is conducive to the lightweight design of the vehicle and helps increase the driving range of the vehicle. Further, by arranging at least part of each of the plurality of seat mounting cross beams 199 in the mounting opening 61 and enabling the at least one of the plurality of seat mounting cross beams 199 to define the plurality of cavities, an enhancement of structural strength of the vehicle body assembly 100 can be facilitated, helping improve safety of the vehicle.

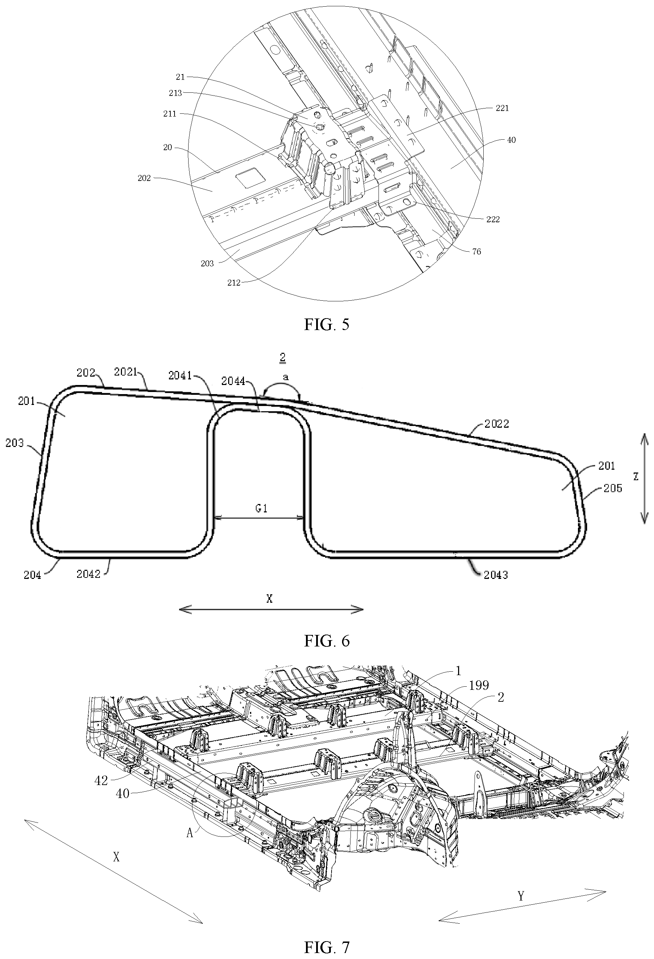

In some embodiments of the present invention, as illustrated in FIG. 7 to FIG. 13, the main vehicle body 6 may include a side sill beam 40 and a reinforcement beam 42.

A receiving cavity 41 may be defined by the side sill beam 40. The side sill beam 40 may extend in the length direction of the vehicle (i.e., the X direction illustrated in FIG. 7). In addition, in the width direction of the vehicle (i.e., the Y direction illustrated in FIG. 7), the side sill beam 40 may be disposed at each of two sides of the vehicle. As some optional embodiments of the present invention, the side sill beam 40 may include an inner side sill panel 43 and an outer side sill panel 44. The inner side sill panel 43 and the outer side sill panel 44 may be arranged in the width direction of the vehicle (i.e., the Y direction illustrated in FIG. 7) and connected to each other. The outer side sill panel 44 may be disposed at a side of a corresponding inner side sill panel 43 away from the vehicle. The receiving cavity 41 may be defined by the inner side sill panel 43 and the outer side sill panel 44 together.

The reinforcement beam 42 is disposed in the receiving cavity 41 and fixedly disposed at the side sill beam 40. As some optional embodiments of the present invention, each of the reinforcement beam 42 and the side sill beam 40 may extend in the length direction of the vehicle (i.e., the X direction illustrated in FIG. 7). In the width direction of the vehicle (i.e., the Y direction illustrated in FIG. 7, i.e., a first direction of the vehicle body assembly 100), an overlapping region exists between an orthographic projection of the reinforcement beam 42 and an orthographic projection of the seat mounting cross beam 199.

In an exemplary embodiment of the present invention, a plane is defined, which is perpendicular to the width direction of the vehicle (i.e., the Y direction illustrated in FIG. 7). That is, a normal line of the plane is parallel to the width direction of the vehicle. The overlapping region exists between the orthographic projection of the reinforcement beam 42 on the plane and the orthographic projection of the seat mounting cross beam 199 on the plane. With this arrangement, when the vehicle experiences the side collision causing the reinforcement beam 42 to intrude towards an inner side of the vehicle, the reinforcement beam 42 comes into contact with the seat mounting cross beam 199 due to the overlapping region between the orthographic projection of the reinforcement beam 42 and the orthographic projection of the seat mounting cross beam 199 of the vehicle. The seat mounting cross beam 199 can effectively support the reinforcement beam 42, reducing a probability of the reinforcement beam 42 continuing to intrude towards the inner side of the vehicle into the occupant compartment.

Therefore, when the vehicle experiences the side collision, the reinforcement beam 42 comes into contact with the seat mounting cross beam 199 as the reinforcement beam 42 intrudes towards the inner side of the vehicle. The seat mounting cross beam 199 can effectively support the reinforcement beam 42, reducing the probability of the reinforcement beam 42 continuing to intrude towards the inner side of the vehicle into the occupant compartment. Thus, passengers inside the occupant compartment of the vehicle can be reliably protected, which helps improve the safety of the vehicle.

In addition, when the vehicle experiences the side collision, an impact force received by the reinforcement beam 42 can be transferred through the seat mounting cross beam 199 to other structures of the vehicle body.

In some embodiments of the present invention, in the first direction, the orthographic projection of the reinforcement beam 42 can cover the orthographic projection of the seat mounting cross beam 199. In an exemplary embodiment of the present invention, a plane is defined, which is perpendicular to the first direction (i.e., the width direction of the vehicle, i.e., the Y direction illustrated in FIG. 7), and the orthographic projection of the reinforcement beam 42 on the plane covers the orthographic projection of the seat mounting cross beam 199 on the plane. That is, the orthographic projection of the seat mounting cross beam 199 on the plane is located within the orthographic projection of the reinforcement beam 42 on the plane. Such an arrangement can allow for reasonable positioning of the reinforcement beam 42 and the seat mounting cross beam 199, in such a manner that the seat mounting cross beam 199 can effectively support the reinforcement beam 42 when the vehicle experiences the side collision, helping improve the safety of the vehicle.

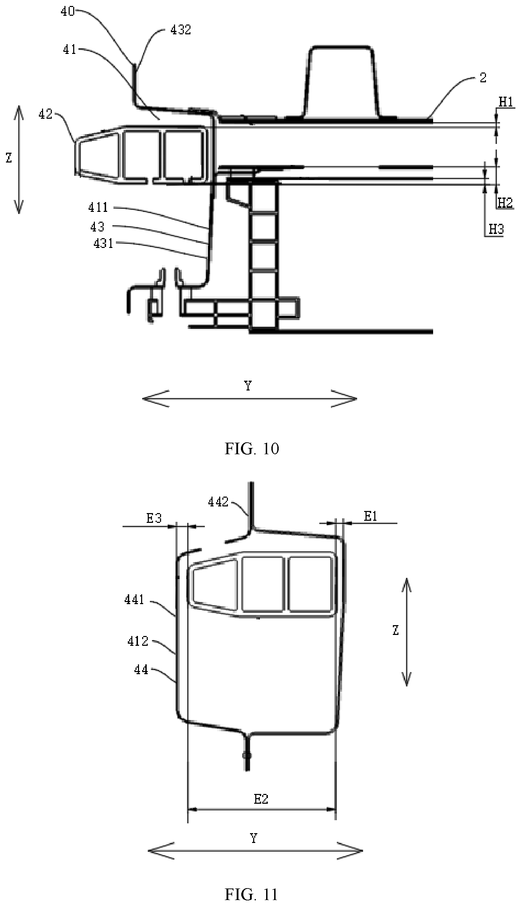

In some embodiments of the present invention, as illustrated in FIG. 7 to FIG. 13, in a second direction of the vehicle body assembly 100 (i.e., the height direction of the vehicle, i.e., the Z direction illustrated in FIG. 10), an upper surface of the reinforcement beam 42 may be lower than an upper surface of the seat mounting cross beam 199. That is, the upper surface of the seat mounting cross beam 199 may be higher than the upper surface of the reinforcement beam 42. The second direction is perpendicular to the first direction. In some embodiments of the present invention, the upper surface of the reinforcement beam 42 may be flush with the upper surface of the seat mounting cross beam 199. Such an arrangement can allow for the reasonable positioning of the reinforcement beam 42 and the seat mounting cross beam 199, in such a manner that the seat mounting cross beam 199 can effectively support the reinforcement beam 42 when the vehicle experiences the side collision, helping improve the safety of the vehicle.

In some embodiments of the present invention, as illustrated in FIG. 10, a spacing distance between the upper surface of the reinforcement beam 42 and the upper surface of the seat mounting cross beam 199 may be H1, where H1 may satisfy a relationship: 0 mm≤H1≤4 mm. That is, in the second direction of the vehicle body assembly 100 (i.e., the height direction of the vehicle, i.e., the Z direction illustrated in FIG. 10), the spacing distance between the upper surface of the reinforcement beam 42 and the upper surface of the seat mounting cross beam 199 may be any value between 0 mm and 4 mm. For example, H1 may be, but is not limited to, 0 mm, 1 mm, 2 mm, 3 mm, 4 mm, etc. Such an arrangement can enable the spacing distance between the upper surface of the reinforcement beam 42 and the upper surface of the seat mounting cross beam 199 to be reasonable, in such a manner that the seat mounting cross beam 199 can effectively support the reinforcement beam 42 when the vehicle experiences the side collision, helping improve the safety of the vehicle.

As some optional embodiments of the present invention, setting the upper surface of the reinforcement beam 42 to be lower than or flush with the upper surface of the seat mounting cross beam 199, and setting the spacing distance between the upper surface of the reinforcement beam 42 and the upper surface of the seat mounting cross beam 199 to H1, can allow the reinforcement beam 42 to be lowered. In this way, an overlapping region exists between orthographic projections of the reinforcement beam 42 and another structure (e.g., the battery pack 5) of the vehicle in the first direction of the vehicle body assembly 100, without increasing a size of the reinforcement beam 42 in the second direction, providing protection for the battery pack 5 through the reinforcement beam 42.

As some optional embodiments of the present invention, the upper surface of the reinforcement beam 42 may be flush with the upper surface of the seat mounting cross beam 199. With such an arrangement, the seat mounting cross beam 199 can also effectively support the reinforcement beam 42 when the vehicle experiences the side collision, helping improve the safety of the vehicle.

In some embodiments of the present invention, as illustrated in FIG. 10, in the second direction of the vehicle body assembly 100 (i.e., the height direction of the vehicle, i.e., the Z direction illustrated in FIG. 10), a lower surface of the reinforcement beam 42 is adapted to be lower than a lower surface of the seat mounting cross beam 199. That is, the lower surface of the seat mounting cross beam 199 may be higher than the lower surface of the reinforcement beam 42. In some embodiments of the present invention, the lower surface of the reinforcement beam 42 may also be flush with the lower surface of the seat mounting cross beam 199. That is, the lower surfaces of the seat mounting cross beam 199 and the reinforcement beam 42 are at a same height. Such an arrangement can allow for the reasonable positioning of the reinforcement beam 42 and the seat mounting cross beam 199, in such a manner that the seat mounting cross beam 199 can effectively support the reinforcement beam 42 when the vehicle experiences the side collision, helping improve the safety of the vehicle.

In some embodiments of the present invention, as illustrated in FIG. 10, a spacing distance between the lower surface of the reinforcement beam 42 and the lower surface of the seat mounting cross beam 199 may be H2, where H2 may satisfy a relationship: 0 mm≤H2≤16 mm. That is, in the second direction of the vehicle body assembly 100 (i.e., the height direction of the vehicle, i.e., the Z direction illustrated in FIG. 10), the spacing distance between the lower surface of the reinforcement beam 42 and the lower surface of the seat mounting cross beam 199 may be any value between 0 mm and 16 mm. For example, H2 may be, but is not limited to, 0 mm, 5 mm, 10 mm, 13 mm, 16 mm, etc. That is, the lower surface of the reinforcement beam 42 may be lower than the lower surface of the seat mounting cross beam 199, or the lower surface of the reinforcement beam 42 may be flush with the lower surface of the seat mounting cross beam 199.

Such an arrangement can enable the spacing distance between the lower surface of the reinforcement beam 42 and the lower surface of the seat mounting cross beam 199 to be reasonable, in such a manner that the seat mounting cross beam 199 can effectively support the reinforcement beam 42 when the vehicle experiences the side collision, helping improve the safety of the vehicle.

As some optional embodiments of the present invention, the seat mounting cross beam 199 may include a front cross beam for front seat mounting 1 and a rear cross beam for front seat mounting 2. A spacing distance between the lower surface of the reinforcement beam 42 and a lower surface of the rear cross beam for front seat mounting 2 may be H2. A spacing distance between the upper surface of the reinforcement beam 42 and an upper surface of the rear cross beam for front seat mounting 2 may be H1.

In some embodiments of the present invention, as illustrated in FIG. 10, in the first direction, an overlapping region may exist between the orthographic projection of the reinforcement beam 42 and an orthographic projection of the battery pack 5. In an exemplary embodiment of the present invention, a plane is defined, which is perpendicular to the first direction (i.e., the width direction of the vehicle, i.e., the Y direction illustrated in FIG. 10). The overlapping region exists between the orthographic projection of the reinforcement beam 42 on the plane and the orthographic projection of the battery pack 5 on the plane. Such an arrangement can provide protection for the battery pack 5 through the reinforcement beam 42. Thus, when the vehicle experiences the side collision, the battery pack 5 can be prevented from being impacted or a collision force applied to the battery pack 5 can be reduced, which can reduce a probability of dangerous conditions such as an explosion of the battery pack 5 due to an impact.

In some embodiments of the present invention, as illustrated in FIG. 10, in the second direction of the vehicle body assembly 100 (i.e., the height direction of the vehicle, i.e., the Z direction illustrated in FIG. 10), the lower surface of the reinforcement beam 42 may be lower than an upper surface of the battery pack 5. That is, the upper surface of the battery pack 5 may be higher than the lower surface of the reinforcement beam 42. The second direction is perpendicular to the first direction. Such an arrangement can make a relative position between the reinforcement beam 42 and the battery pack 5 reasonable. Thus, when the vehicle experiences the side collision, the reinforcement beam 42 can provide protection for the battery pack 5, which can reduce the probability of dangerous conditions such as the explosion of the battery pack 5 due to the impact.

In some embodiments of the present invention, as illustrated in FIG. 10, a spacing distance between the lower surface of the reinforcement beam 42 and the upper surface of the battery pack 5 may be H3, where H3 may satisfy a relationship: 2 mm≤H3≤8 mm. That is, in the second direction of the vehicle body assembly 100 (i.e., the height direction of the vehicle, i.e., the Z direction illustrated in FIG. 10), the spacing distance between the lower surface of the reinforcement beam 42 and the upper surface of the battery pack 5 may be any value between 2 mm and 8 mm. For example, H3 may be, but is not limited to, 2 mm, 5 mm, 8 mm, etc. Such an arrangement can enable the spacing distance between the lower surface of the reinforcement beam 42 and the upper surface of the battery pack 5 to be reasonable, in such a manner that the reinforcement beam 42 can provide protection for the battery pack 5 when the vehicle experiences the side collision, which can prevent the battery pack 5 from being impacted or reduce the collision force applied to the battery pack 5.

In addition, it should be explained that, when the vehicle experiences the side collision, the collision force applied to the reinforcement beam 42 can be transferred through the seat mounting cross beam 199 to other structures of the vehicle body, reducing a probability of the reinforcement beam 42 compressing the battery pack 5.

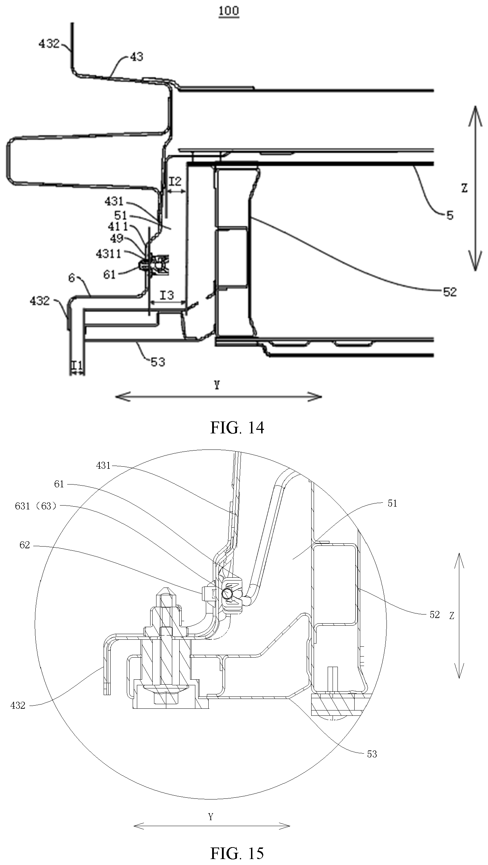

In some embodiments of the present invention, as illustrated in FIG. 14, in the first direction, the side sill beam 40 may be spaced apart from the battery pack 5 to form an assembly space 51 for mounting a component. As some optional embodiments of the present invention, the battery pack 5 may be arranged at the main vehicle body 6 by means of bolting.

In the first direction of the vehicle body assembly 100, i.e., the width direction of the vehicle (i.e., the Y direction illustrated in FIG. 14), the side sill beam 40 is spaced apart from the battery pack 5 to form the assembly space 51 for mounting a component 66. That is, in the first direction of the vehicle body assembly 100, the side sill beam 40 is spaced apart from the battery pack 5, and the assembly space 51 for mounting the component 66 is formed between the side sill beam 40 and the battery pack 5. It should be understood that the main vehicle body 6 includes two side sill beams 40. The two side sill beams 40 are respectively disposed at two sides of the battery pack 5 in the first direction of the vehicle body assembly 100. Further, each of the two side sill beams 40 is spaced apart from the battery pack 5 to form the assembly space 51 for mounting the component 66.

The assembly space 51 can be used for mounting the component of the vehicle. For example, as illustrated in FIG. 14 and FIG. 15, the assembly space 51 can be used for mounting a pipeline 661 of the vehicle. Of course, the assembly space 51 can also be used for mounting other components 66 of the vehicle. The present invention is not limited in this regard. As an example, in the present invention, the assembly space 51 is used for mounting the pipeline 661 of the vehicle. The pipeline 661 may be, but is not limited to, a brake pipeline, an electrical pipeline, etc. At least part of the pipeline 661 may be disposed in the assembly space 51. By disposing the at least part of the pipeline 661 in the assembly space 51, the side sill beam 40 and the battery pack 5 can provide protection for the pipeline 661. Moreover, compared with the related art, arranging the at least part of the pipeline 661 in the assembly space 51 can enable the pipeline 661 to be lifted up, which can reduce a probability of the pipeline 661 being impacted by objects such as flying stones and debris from a road surface, and reduce an impact force from these objects. Thus, a probability of damage to the pipeline 661 can be lowered, which is conducive to extending a service life of the pipeline 661.

Therefore, by spacing the side sill beam 40 apart from the battery pack 5 in the first direction of the vehicle body assembly 100 to form the assembly space 51, the at least part of the pipeline 661 of the vehicle can be disposed in the assembly space 51, providing protection for the pipeline 661 through the side sill beam 40 and the battery pack 5. In addition, the pipeline 661 can be lifted up, which can reduce the probability of damage to the pipeline 661.

Further, by disposing the at least part of the pipeline 661 in the assembly space 51, damage to the pipeline 661 during the side collision of the vehicle can be reduced.

In addition, disposing the at least part of the pipeline 661 in the assembly space 51 can facilitate maintenance of the pipeline 661.

In some embodiments of the present invention, as illustrated in FIG. 14 and FIG. 15, the battery pack 5 may have a battery pack connection portion 53. The battery pack connection portion 53 may be bolted to the side sill beam 40. In the second direction of the vehicle body assembly 100, i.e., the height direction of the vehicle (i.e., the Z direction illustrated in FIG. 14), the battery pack connection portion 53 may be located below the assembly space 51 and cover an open end of the assembly space 51. By disposing the battery pack connection portion 53 below the assembly space 51, the component 66 (such as the pipeline 661) disposed in the assembly space 51 can be protected by the battery pack connection portion 53, which can further reduce the probability of the pipeline 661 disposed in the assembly space 51 being impacted by the objects such as flying stones and debris from the road surface, lowering the probability of damage to the pipeline 661.

In some embodiments of the present invention, as illustrated in FIG. 14 and FIG. 15, in the second direction, i.e., the height direction of the vehicle (i.e., the Z direction illustrated in FIG. 1), an orthographic projection of the assembly space 51 may fall within a range of an orthographic projection of the battery pack connection portion 53. In an exemplary embodiment of the present invention, a plane is defined, which is perpendicular to the height direction of the vehicle. That is, a normal line of the plane is parallel to the height direction of the vehicle. The orthographic projection of the assembly space 51 on the plane may fall within the range of the orthographic projection of the battery pack connection portion 53 on the plane. Such an arrangement can further reduce the probability of the pipeline 661 disposed in the assembly space 51 being impacted by the objects such as flying stones and debris from the road surface, further lowering the probability of damage to the pipeline 661.

In some embodiments of the present invention, as illustrated in FIG. 14 and FIG. 15, in the first direction, i.e., the width direction of the vehicle (i.e., the Y direction illustrated in FIG. 14), a spacing distance between the side sill beam 40 and the battery pack connection portion 53 may be I1, where I1 may satisfy a relationship: 7 mm≤I1≤13 mm. That is, the spacing distance between the side sill beam 40 and the battery pack connection portion 53 may be any value between 7 mm and 13 mm. For example, the spacing distance between the side sill beam 40 and the battery pack connection portion 53 may be, but is not limited to, 7 mm, 10 mm, 13 mm, etc. Such an arrangement can enable the spacing distance between the side sill beam 40 and the battery pack connection portion 53 to be reasonable. Thus, during mounting of the battery pack 5, a probability of interference between the side sill beam 40 and the battery pack connection portion 53 can be reduced, lowering difficulty of mounting the battery pack 5.

As some optional embodiments of the present invention, as illustrated in FIG. 14, the side sill beam 40 may include an inner side sill panel 43. The inner side sill panel 43 may include an inner panel body 431 and an inner panel connection plate 432 disposed at each of two ends of the inner panel body 431. In the first direction, i.e., the width direction of the vehicle (i.e., the Y direction illustrated in FIG. 14), a spacing distance between the inner panel connection plate 432 at a lower end of the inner panel body 431 and the battery pack connection portion 53 may be I1.

In some embodiments of the present invention, as illustrated in FIG. 14 and FIG. 15, the battery pack 5 may further have a battery pack body 52. The battery pack body 52 may be connected to the battery pack connection portion 53. The side sill beam 40 may be spaced apart from the battery pack body 52 to form the assembly space 51. In the first direction, i.e., the width direction of the vehicle (i.e., the Y direction illustrated in FIG. 14), a spacing distance between the side sill beam 40 and the battery pack body 52 may be I2, where I2 may satisfy a relationship: 7 mm≤I2≤13 mm. That is, the spacing distance between the side sill beam 40 and the battery pack body 52 may be any value between 7 mm and 13 mm. For example, the spacing distance between the side sill beam 40 and the battery pack body 52 may be, but is not limited to, 7 mm, 10 mm, 13 mm, etc. Such an arrangement can enable the spacing distance between the side sill beam 40 and the battery pack body 52 to be reasonable. Thus, during the mounting of the battery pack 5, a probability of interference between the side sill beam 40 and the battery pack body 52 can be reduced, lowering the difficulty of mounting the battery pack 5.

It should be explained that, I2 may be understood as a spacing distance between a side wall surface of the side sill beam 40 facing towards the battery pack body 52 and the battery pack body 52. The side wall surface of the side sill beam 40 facing towards the battery pack body 52 may not be perpendicular to a horizontal plane. In addition, the side wall surface of the side sill beam 40 facing towards the battery pack body 52 may not be parallel to the battery pack body 52. I2 may be understood as a spacing distance between any part of an inner side wall 411 of the side sill beam 40 facing towards the battery pack body 52 and the battery pack body 52 in the first direction. In some embodiments of the present invention, it should also be understood that, in the first direction, the spacing distance between the side sill beam 40 and the battery pack body 52 is approximately I2.

As some optional embodiments of the present invention, the side sill beam 40 may include the inner side sill panel 43. The inner side sill panel 43 may include the inner panel body 431 and the inner panel connection plate 432 disposed at each of the two ends of the inner panel body 431. In the first direction, i.e., the width direction of the vehicle (i.e., the Y direction illustrated in FIG. 14), a spacing distance between the inner panel body 431 and the battery pack body 52 may be I2.

In some embodiments of the present invention, as illustrated in FIG. 14 and FIG. 15, a surface of the side sill beam 40 facing towards the assembly space 51 may have a first recess 49. In the first direction, the first recess 49 may be recessed away from the battery pack 5. It should be noted that the main vehicle body 6 may include two side sill beams 40. In the first direction of the vehicle body assembly 100, the two side sill beams 40 may be disposed at two sides of the battery pack 5, respectively. Each side sill beam 40 may have the inner side sill panel 43. The surface of the side sill beam 40 facing towards the assembly space 51 is a surface of the inner side sill panel 43 facing towards the assembly space 51. The surface of the inner side sill panel 43 facing towards the assembly space 51 may have the first recess 49. In the first direction, the first recess 49 may be recessed away from the battery pack 5. Such an arrangement can increase a Y-direction dimension of the assembly space 51, facilitating placement of the component 66 in the assembly space 51. In addition, a space can also be provided for the mounting of the battery pack 5, which contributes to an increase in a volume of the battery pack 5, increasing the driving range of the vehicle.

As some optional embodiments of the present invention, in the second direction of the vehicle body assembly 100, i.e., the height direction of the vehicle (i.e., the Z direction illustrated in FIG. 14), the first recess 49 may be formed at a lower middle part of the side sill beam 40. Such an arrangement can allow for reasonable positioning of the first recess 49, and can reduce a probability of interference between the component 66 (such as the pipeline 661) disposed in the first recess 49 and the battery pack 5.

In some embodiments of the present invention, as illustrated in FIG. 14 and FIG. 15, in the first direction, i.e., the width direction of the vehicle (i.e., the Y direction illustrated in FIG. 1), a spacing distance between an inner side wall 411 of the first recess 49 and the battery pack 5 may be I3, where I3 may satisfy a relationship: 23 mm≤I3≤32 mm. In an exemplary embodiment of the present invention, a spacing distance between the inner side wall 411 of the first recess 49 and the battery pack body 52 may be I3. That is, the spacing distance between the inner side wall 411 of the first recess 49 and the battery pack body 52 may be any value between 23 mm and 32 mm. For example, the spacing distance between the inner side wall 411 of the first recess 49 and the battery pack body 52 may be, but is not limited to, 23 mm, 27.5 mm, 32 mm, etc. Such an arrangement can enable the spacing distance between the inner side wall 411 of the first recess 49 and the battery pack body 52 to reasonable, which can not only facilitate the placement of the component 66 in the assembly space 51, but also provide a space for the mounting of the battery pack 5, contributing to the increase in the volume of the battery pack 5.

In some embodiments of the present invention, as illustrated in FIG. 14 and FIG. 15, the vehicle body assembly 100 of the vehicle may further include a connection member 64. The connection member 64 may be used for mounting the component 66 and may be detachably connected to the side sill beam 40. For example, the connection member 64 may be used for mounting the pipeline 661.

As some optional embodiments of the present invention, the connection member 64 may have a first connection portion and a second connection portion. The first connection portion may be used for mounting the component 66. For example, the first connection portion may define a first mounting hole through which the pipeline 661 may pass. The second connection portion may be detachably connected to the side sill beam 40. For example, the second connection portion may be engaged with and connected to the side sill beam 40. With the connection member 64, the component 66 (such as the pipeline 661) can be detachably mounted at the side sill beam 40, which can prevent the component 66 (such as the pipeline 661) from shaking inside the assembly space 51.

As some optional embodiments of the present invention, a plurality of connection members 64 may be provided. The plurality of connection members 64 may be arranged at intervals in an extension direction of the pipeline 661.

In some embodiments of the present invention, as illustrated in FIG. 15, the connection member 64 may have one of an engagement portion 65 and an engagement opening 4311, and the side sill beam 40 may have another one of the engagement portion 65 and the engagement opening 4311. The engagement portion 65 may be engaged with the engagement opening 4311.

As some optional embodiments of the present invention, the connection member 64 may have the engagement portion 65, and the side sill beam 40 may have the engagement opening 4311. As some optional embodiments of the present invention, the connection member 64 may have the engagement opening 4311, and the side sill beam 40 may have the engagement portion 65. As an example, the connection member 64 has the engagement portion 65 and the side sill beam 40 has the engagement opening 4311. The engagement opening 4311 may be located at the inner side sill panel 43 of the side sill beam 40 and extend through the inner side sill panel 43 in a thickness direction of the inner side sill panel 43. The engagement portion 65 may pass through the engagement opening 4311 and is engaged with and connected to a surface of the inner side sill panel 43 away from the battery pack 5, or the engagement portion 65 may also pass through the engagement opening 4311 and is engaged with and connected to an inner wall of the engagement opening 4311. Such an arrangement can enable the connection member 64 to be engaged with and connected to the side sill beam 40, firmly mounting the component 66 (such as the pipeline 661) to the side sill beam 40.

As some optional embodiments of the present invention, the engagement opening 4311 may be formed at the first recess 49.

As some optional embodiments of the present invention, the engagement portion 65 may include an engagement post and a plurality of snapping hooks connected to an end of the engagement post. The snapping hook may have an end connected to an end of the engagement post away from the battery pack 5. In the first direction, the snapping hook may gradually extend towards the battery pack 5. In addition, in the first direction and from a position away from the battery pack 5 towards a position close to the battery pack 5, a spacing between the snapping hook and the engagement post gradually increases.

In some embodiments of the present invention, as illustrated in FIG. 14 and FIG. 15, the battery pack 5 may have a plurality of battery pack connection portions 53. Each of the plurality of battery pack connection portions 53 may be connected to a corresponding side sill beam 40. For example, the side sill beam 40 may include a left side sill beam 47 and a right side sill beam 48, and the plurality of battery pack connection portions 53 may be connected to a corresponding one of the left side sill beam 47 and the right side sill beam 48. In an exemplary embodiment of the present invention, the battery pack 5 may have two battery pack connection portions 53. In the width direction of the vehicle (i.e., the Y direction illustrated in FIG. 14), the two battery pack connection portions 53 are located at a left side and a right side of the battery pack 5, respectively. That is, one of the two battery pack connection portions 53 is disposed close to the left side sill beam 47, while another of the two battery pack connection portions 53 is disposed close to the right side sill beam 48. The battery pack connection portion 53 disposed close to the right side sill beam 48 may be connected to the right side sill beam 48, while the battery pack connection portion 53 disposed close to the left side sill beam 47 may be connected to the left side sill beam 47.

As some optional embodiments of the present invention, as illustrated in FIG. 14 and FIG. 15, the battery pack connection portion 53 may be located below the side sill beam 4 and may be connected to the side sill beam 4 by a bolt. As some optional embodiments of the present invention, the battery pack connection portion 53 may be connected to the inner side sill panel 43 of the side sill beam 4 by a bolt. Such an arrangement can enable the battery pack 5 to be connected to the side sill beam 4, improving mounting stability of the battery pack 5.

In some embodiments of the present invention, as illustrated in FIG. 10 to FIG. 12, in the first direction of the vehicle body assembly 100, i.e., in the width direction of the vehicle (i.e., the Y direction illustrated in FIG. 10), the reinforcement beam 42 is spaced apart from an inner side wall 411 of the receiving cavity 41. In an exemplary embodiment of the present invention, the reinforcement beam 42 is spaced apart from an inner wall of the inner side sill panel 43. The inner wall of the inner side sill panel 43 may be understood as a wall of the inner side sill panel 43 facing towards the receiving cavity 41. By spacing the reinforcement beam 42 apart from the inner side wall 411 of the receiving cavity 41 in the first direction of the vehicle body assembly 100, a spacing distance is formed between the reinforcement beam 42 and the inner side wall 411 of the receiving cavity 41.

When the vehicle experiences the side collision, due to a spacing distance between the reinforcement beam 42 and the inner side wall 411 of the receiving cavity 41, the spacing distance between the reinforcement beam 42 and the inner side wall 411 of the receiving cavity 41 can fully absorb an intrusion of the reinforcement beam 42 when the collision force is small, which can prevent the reinforcement beam 42 from intruding towards the inner side of the vehicle, preventing the reinforcement beam 42 from transmitting collision energy to an interior of the vehicle and the battery pack 5. When the collision force is large, the spacing distance between the reinforcement beam 42 and the inner side wall 411 of the receiving cavity 41 can absorb a part of the intrusion of the reinforcement beam 42, which can reduce the intrusion of the reinforcement beam 42 towards the inner side of the vehicle, reducing the collision force transmitted by the reinforcement beam 42 to the interior of the vehicle and the battery pack 5.

Thus, by spacing the reinforcement beam 42 apart from the inner side wall 411 of the receiving cavity 41 in the first direction of the vehicle body assembly 100, the spacing distance between the reinforcement beam 42 and the inner side wall 411 of the receiving cavity 41 can absorb the intrusion of the reinforcement beam 42 when the vehicle experiences the side collision. In this way, the reinforcement beam 42 can be prevented from intruding towards the inner side of the vehicle or the intrusion of the reinforcement beam 42 towards the inner side of the vehicle can be reduced, which can prevent the reinforcement beam 42 from transmitting the collision energy to the interior of the vehicle and the battery pack 5 or reduce the collision force transmitted by the reinforcement beam 42 to the interior of the vehicle and the battery pack 5, helping improve an impact resistance capability of the vehicle and protect the battery pack 5. Therefore, a probability of safety accidents can be reduced.

As some optional embodiments of the present invention, the reinforcement beam 42 may be, but is not limited to being, made of aluminum.

In some embodiments of the present invention, as illustrated in FIG. 11, the spacing distance between the reinforcement beam 42 and the inner side wall 411 of the receiving cavity 41 may be E1, where E1 may satisfy a relationship: 2 mm≤E1≤8 mm. In an exemplary embodiment of the present invention, in the first direction of the vehicle body assembly 100, the reinforcement beam 42 may be spaced apart from the inner side wall 411 of the receiving cavity 41, and the spacing distance between the reinforcement beam 42 and the inner side wall 411 of the receiving cavity 41 may be E1. E1 may be any value between 2 mm and 8 mm. For example, E1 may be, but is not limited to, 2 mm, 5 mm, 8 mm, etc. Such an arrangement can enable the spacing distance between the reinforcement beam 42 and the inner side wall 411 of the receiving cavity 41 to be reasonable, which can not only enable the spacing distance between the reinforcement beam 42 and the inner side wall 411 of the receiving cavity 41 to effectively absorb the intrusion of the reinforcement beam 42, but also avoid occupation of a mounting space for the battery pack 5.

In some embodiments of the present invention, as illustrated in FIG. 11, in the first direction, i.e., in the width direction of the vehicle (i.e., the Y direction illustrated in FIG. 11), the spacing distance between the reinforcement beam 42 and the inner side wall 411 of the receiving cavity 41 may be E1, and a width dimension of the reinforcement beam 42 may be E2, where E1 and E2 may satisfy a relationship: 0.04≤E1/E2≤0.05. That is, E1/E2 may be any value between 0.04 and 0.05. For example, E1/E2 may be, but is not limited to, 0.04, 0.045, 0.05, etc. As a specific embodiment of the present invention, the spacing distance E1 between the reinforcement beam 42 and the inner side wall 411 of the receiving cavity 41 may be 5 mm, and the width dimension E2 of the reinforcement beam 42 may be 115 mm, i.e., E1/E2 may be 0.043478. Such an arrangement can make a proportional relationship between the spacing distance E1 between the reinforcement beam 42 and the inner side wall 411 of the receiving cavity 41 and the width dimension E2 of the reinforcement beam 42 reasonable, helping improve the impact resistance capability of the vehicle.

In some embodiments of the present invention, as illustrated in FIG. 7 to FIG. 9, the vehicle body assembly 100 of the vehicle may further include a first connection member 45. At least part of the first connection member 45 may be located in the receiving cavity 41. In the second direction, the first connection member 45 is located at an end of the reinforcement beam 42 and is located and connected between the side sill beam 40 and the reinforcement beam 42. The second direction is perpendicular to the first direction.

The inner side sill panel 43 may have the inner panel body 431. An end of the inner panel body 431 may include the inner panel connection plate 432. The outer side sill panel 44 may have an outer panel body 441. An end of the outer panel body 441 may include an outer panel connection plate 442. The inner panel connection plate 432 may be connected to the outer panel connection plate 442, in such a manner that the inner side sill panel 43 and the outer side sill panel 44 are connected. The receiving cavity 41 is formed by the inner panel body 431 and the outer panel body 441 together.

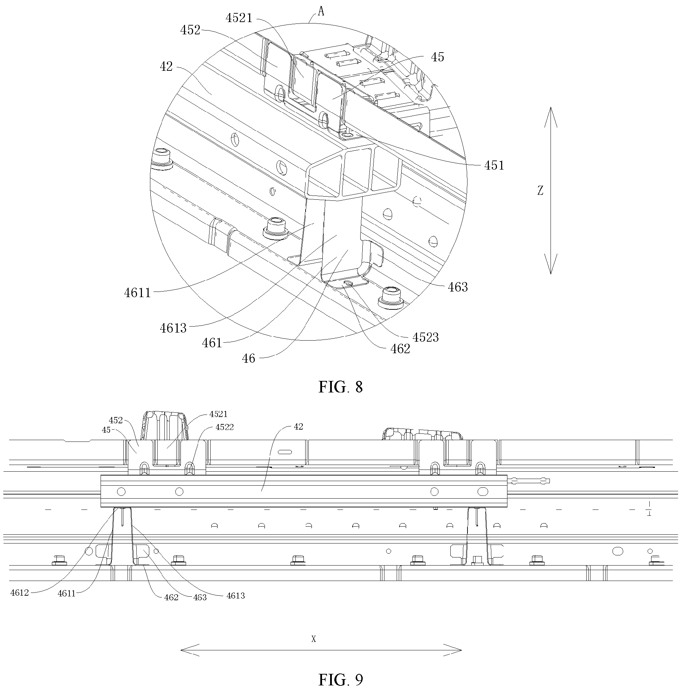

The at least part of the first connection member 45 may be located in the receiving cavity 41. As some optional embodiments of the present invention, a part of a structure of the first connection member 45 may be located in the receiving cavity 41, and another part of the structure of the first connection member 45 may be located between the inner panel connection plate 432 and the outer panel connection plate 442. In the second direction (i.e., the height direction of the vehicle, i.e., the Z direction illustrated in FIG. 8), the first connection member 45 may be located at an end of the reinforcement beam 42 and may be connected between the side sill beam 40 and the reinforcement beam 42.

The length direction of the vehicle (X direction), the width direction of the vehicle (Y direction), and the height direction of the vehicle (Z direction) described in the present invention are all perpendicular to each other.

With the first connection member 45, the side sill beam 40 can be connected to the reinforcement beam 42, firmly fixing the reinforcement beam 42 in the receiving cavity 41. When the vehicle experiences the side collision, the first connection member 45 can constrain a position of the reinforcement beam 42. When the collision force is small, due to a constraint of the first connection member 45, the reinforcement beam 42 does not intrude towards the inner side of the vehicle. When the collision force is large, due to the constraint of the first connection member 45, the intrusion of the reinforcement beam 42 towards the inner side of the vehicle can be reduced, helping improve the impact resistance capability of the vehicle.

In some embodiments of the present invention, as illustrated in FIG. 9, the first connection member 45 may include a first connection plate 451 and a second connection plate 452 that are connected to each other. An angle may be formed between the first connection plate 451 and the second connection plate 452. As some optional embodiments of the present invention, a cross-section of the first connection member 45 may be configured to be substantially L-shaped. That is, the angle between the first connection plate 451 and the second connection plate 452 may be 90° or substantially 90°. The first connection plate 451 may be connected to the reinforcement beam 42, while the second connection plate 452 may be connected to the side sill beam 40. As some optional embodiments of the present invention, the first connection plate 451 and the second connection plate 452 may be integrally formed.

As some optional embodiments of the present invention, the first connection plate 451 may be connected to a top wall of the reinforcement beam 42, and the second connection plate 452 may be connected to the inner panel connection plate 432 of the inner side sill panel 43. In some embodiments of the present invention, the second connection plate 452 may be connected to each of the inner panel connection plate 432 of the inner side sill panel 43 and the outer panel connection plate 442 of the outer side sill panel 44. For example, the second connection plate 452 may be disposed between the inner panel connection plate 432 and the outer panel connection plate 442. Such an arrangement can enable a structural form of the first connection member 45 to be reasonable, firmly connecting the reinforcement beam 42 and the side sill beam 40.

As some optional embodiments of the present invention, as illustrated in FIG. 8, the second connection plate 452 may have a cutout 4521. The cutout 4521 may extend through the second connection plate 452 in a thickness direction of the second connection plate 452. In the embodiments where the second connection plate 452 is disposed between the inner panel connection plate 432 and the outer panel connection plate 442, forming the cutout 4521 at the second connection plate 452 can enable the inner panel connection plate 432 and the outer panel connection plate 442 to be directly welded through the cutout 4521, and enable the second connection plate 452 to be directly welded to each of the inner panel connection plate 432 and the outer panel connection plate 442. Thus, any two of the inner panel connection plate 432, the outer panel connection plate 442, and the second connection plate 452 have a direct connection relationship, which is beneficial for enhancing connection strength between the reinforcement beam 42 and the side sill beam 40.

As some optional embodiments of the present invention, as illustrated in FIG. 8 and FIG. 9, each of the second connection plate 452 and/or the first connection plate 451 may be provided with a reinforcing rib 4522. As some optional embodiments of the present invention, each of the second connection plate 452 and/or the first connection plate 451 may have a weight-reduction hole 4523.

In some embodiments of the present invention, as illustrated in FIG. 7 to FIG. 9, the vehicle body assembly 100 of the vehicle may further include: a second connection member 46. The second connection member 46 may be located in the receiving cavity 41. In the second direction, the second connection member 46 may be located at another end of the reinforcement beam 42 and may be connected between the side sill beam 40 and the reinforcement beam 42.

An entire structure of the second connection member 46 may be located in the receiving cavity 41. In the second direction (i.e., the height direction of the vehicle, i.e., the Z direction illustrated in FIG. 9), the first connection member 45 may be located at the end of the reinforcement beam 42, and the second connection member 46 may be located at the other end of the reinforcement beam 42. That is, in the second direction, the first connection member 45 and the second connection member 46 may be located at two ends of the reinforcement beam 42, respectively. Such an arrangement can allow for reasonable positioning of the first connection member 45 and the second connection member 46 to fully utilize a space of the receiving cavity 41. The second connection member 46 may be connected between the side sill beam 40 and the reinforcement beam 42.

With the second connection member 46, the side sill beam 40 and the reinforcement beam 42 can be connected, firmly fixing the reinforcement beam 42 in the receiving cavity 41. When the vehicle experiences the side collision, the second connection member 46 can constrain the position of the reinforcement beam 42. When the collision force is small, due to the constraint of the second connection member 46, the reinforcement beam 42 does not intrude towards the inner side of the vehicle. When the collision force is large, due to the constraint of the second connection member 46, the intrusion of the reinforcement beam 42 towards the inner side of the vehicle can be reduced, helping improve the impact resistance capability of the vehicle.

In some embodiments of the present invention, as illustrated in FIG. 8 and FIG. 9, the second connection member 46 may include a main connection member body 461, a first connection flange 462, and a second connection flange 463. Both the first connection flange 462 and the second connection flange 463 may be connected to the main connection member body 461. As some optional embodiments of the present invention, the main connection member body 461, the first connection flange 462, and the second connection flange 463 may be integrally formed.

The main connection member body 461 may be connected to the reinforcement beam 42. The first connection flange 462 may be connected to a bottom wall of the receiving cavity 41. The second connection flange 463 may be connected to the inner side wall 411 of the receiving cavity 41. As some optional embodiments of the present invention, the main connection member body 461 may be connected to a bottom wall of the reinforcement beam 42, the first connection flange 462 may be connected to a bottom wall of the inner panel body 431 of the inner side sill panel 43, and the second connection flange 463 may be connected to the inner side wall 411 of the receiving cavity 41. The inner side wall 411 of the receiving cavity 41 may be understood as a side wall of the inner panel body 431 of the inner side sill panel 43.

Such an arrangement can enable a structural form of the second connection member 46 to be reasonable, in such a manner that the second connection member 46 can be connected to each of the reinforcement beam 42, the bottom wall of the receiving cavity 41, and the inner side wall 411 of the receiving cavity 41, firmly connecting the reinforcement beam 42 and the side sill beam 40.

As some optional embodiments of the present invention, a connection method between the outer side sill panel 44 and the inner side sill panel 43, a connection method between the first connection member 45 and the reinforcement beam 42, a connection method between the first connection member 45 and the side sill beam 40, a connection method between the second connection member 46 and the reinforcement beam 42, and a connection method between the second connection member 46 and the side sill beam 40 may all be, but are not limited to, welding, bolting, riveting, or the like.

In some embodiments of the present invention, as illustrated in FIG. 8 and FIG. 9, the main connection member body 461 may include a first plate body 4611, a second plate body 4612, and a third plate body 4613. The first plate body 4611 is opposite to and spaced apart from the third plate body 4613. The second plate body 4612 is connected between the first plate body 4611 and the third plate body 4613. In an exemplary embodiment of the present invention, the second plate body 4612 has an end that may be connected to the first plate body 4611 and another end that may be connected to the third plate body 4613. As some optional embodiments of the present invention, the first plate body 4611, the second plate body 4612, and the third plate body 4613 may be integrally formed. The second plate body 4612 may be connected to the reinforcement beam 42. As some optional embodiments of the present invention, the second plate body 4612 may be connected to the bottom wall of the reinforcement beam 42.

As some optional embodiments of the present invention, each of the first plate body 4611 and the third plate body 4613 may extend in the second direction and away from the reinforcement beam 42. That is, the first plate body 4611, the second plate body 4612, and the third plate body 4613 may be configured to have a structure similar to the Chinese character " 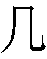 ". Such an arrangement can enable the second connection member 46 to have high structural strength.

An end of the first plate body 4611 away from the second plate body 4612 may be provided with the first connection flange 462, or an end of the third plate body 4613 away from the second plate body 4612 may be provided with the first connection flange 462, or each of the end of the first plate body 4611 away from the second plate body 4612 and the end of the third plate body 4613 away from the second plate body 4612 may be provided with the first connection flange 462. As some optional embodiments of the present invention, each of the end of the first plate body 4611 away from the second plate body 4612 and the end of the third plate body 4613 away from the second plate body 4612 is provided with the first connection flange 462. Such an arrangement can provide the second connection member 46 with more first connection flanges 462, which can enhance connection strength between the second connection member 46 and the side sill beam 40.

A side edge of the first plate body 4611 may be provided with the second connection flange 463, or a side edge of the third plate body 4613 may be provided with the second connection flange 463, or each of the side edge of the first plate body 4611 and the side edge of the third plate body 4613 may be provided with the second connection flange 463. As some optional embodiments of the present invention, each of the side edge of the first plate body 4611 and the side edge of the third plate body 4613 is provided with the second connection flange 463. Such an arrangement can provide the second connection member 46 with more second connection flanges 463, which can further enhance the connection strength between the second connection member 46 and the side sill beam 40.

It should be understood that, in the second direction, the second connection member 46 may be supported between the reinforcement beam 42 and the side sill beam 40.

As some optional embodiments of the present invention, each of the second plate body 4612 and/or the first connection flange 462 may have the weight-reduction hole 4523.

As some optional embodiments of the present invention, each of the first connection member 45 and the second connection member 46 may be a cold-stamped part.

In some embodiments of the present invention, as illustrated in FIG. 11, in the first direction, i.e., in the width direction of the vehicle (i.e., the Y direction illustrated in FIG. 11), the reinforcement beam 42 may be spaced apart from an outer side wall 412 of the receiving cavity 41. In an exemplary embodiment of the present invention, the reinforcement beam 42 is spaced apart from an inner wall of the outer side sill panel 44. The inner wall of the outer side sill panel 44 may be understood as a wall of the outer side sill panel 44 facing towards the receiving cavity 41. In other words, the outer side wall 412 of the receiving cavity 41 may be understood as a side wall of the outer panel body 441 of the outer side sill panel 44. By spacing the reinforcement beam 42 apart from the outer side wall 412 of the receiving cavity 41 in the first direction of the vehicle body assembly 100, the outer side wall 412 of the receiving cavity 41 can crumple towards the reinforcement beam 42 and absorb energy when the vehicle experiences the side collision, which can prevent the collision energy from being transmitted to the interior of the vehicle and the battery pack 5 or reduce the collision force transmitted to the interior of the vehicle and the battery pack 5, helping improve the impact resistance capability of the vehicle.

In some embodiments of the present invention, as illustrated in FIG. 11, a spacing distance between the reinforcement beam 42 and the outer side wall 412 of the receiving cavity 41 may be E3, where E3 may satisfy a relationship: 5 mm≤E3≤13 mm. In an exemplary embodiment of the present invention, in the first direction of the vehicle body assembly 100, the reinforcement beam 42 may be spaced apart from the outer side wall 412 of the receiving cavity 41, and the spacing distance between the reinforcement beam 42 and the outer side wall 412 of the receiving cavity 41 may be E3. E3 may be any value between 5 mm and 13 mm. For example, E3 may be, but is not limited to, 5 mm, 8 mm, 13 mm, etc. Such an arrangement can enable the spacing distance between the reinforcement beam 42 and the outer side wall 412 of the receiving cavity 41 to be reasonable, which can reduce assembly difficulty of the side sill component 4, and allow the outer side wall 412 of the receiving cavity 41 to have a reasonable crumpling space.

In some embodiments of the present invention, as illustrated in FIG. 10, in the first direction, i.e., in the width direction of the vehicle (i.e., the Y direction illustrated in FIG. 11), a maximum width of the side sill beam 40 may be E4, and a width of the reinforcement beam 42 may be E2, where E4 and E2 satisfy a relationship: 0.75E4≤E2≤0.9E4. That is, E2 may be any value between 0.75E4 and 0.9E4. For example, E2 may be, but is not limited to, 0.75E4, 0.85E4, 0.9E4, etc. As a specific embodiment of the present invention, the maximum width of the side sill beam 40 may be 141.1 mm, and the width dimension E2 of the reinforcement beam 42 may be 115 mm, i.e., E2 may be 0.815E4. Such an arrangement can make a proportional relationship between the maximum width E4 of the side sill beam 40 and the width E2 of the reinforcement beam 42 reasonable, helping improve the impact resistance capability of the vehicle.

It should be understood that the maximum width E4 of the side sill beam 40 may be an overall maximum width of the side sill beam 40. As some optional embodiments of the present invention, the outer side sill panel 44 may be provided with a reinforcing plate at an outer side of the outer side sill panel 44. The maximum width E4 of the side sill beam 40 may be a width from the reinforcing plate to the inner side sill panel 43.

In some embodiments of the present invention, as illustrated in FIG. 10 to FIG. 12, the reinforcement beam 42 may have a plurality of buffer chambers 423. In the first direction, i.e., the width direction of the vehicle (i.e., the Y direction illustrated in FIG. 11), the plurality of buffer chambers 423 may be sequentially arranged. Such an arrangement can effectively enhance side collision performance of the reinforcement beam 42, contributing to improvement of the side collision performance of the vehicle. In addition, constructing the plurality of buffer chambers 423 of the reinforcement beam 42 to be sequentially arranged in the first direction facilitates a reduction of manufacturing difficulty of the reinforcement beam 42 and an increase in a manufacturing efficiency of the reinforcement beam 42.

As some optional embodiments of the present invention, as illustrated in FIG. 10 to FIG. 12, a first cavity 424 may be defined by the reinforcement beam 42. A plurality of partition plates 425 may be disposed in the first cavity 424. The plurality of partition plates 425 may be sequentially arranged at intervals in the first direction to divide the first cavity 424 into the plurality of buffer chambers 423.

As some optional embodiments of the present invention, the reinforcement beam 42 may be integrally formed, or the reinforcement beam 42 may be divided into several segments and then welded together. As some optional embodiments of the present invention, a wall thickness of each of the reinforcement beam 42 and the partition plate 425 may be 4 mm.

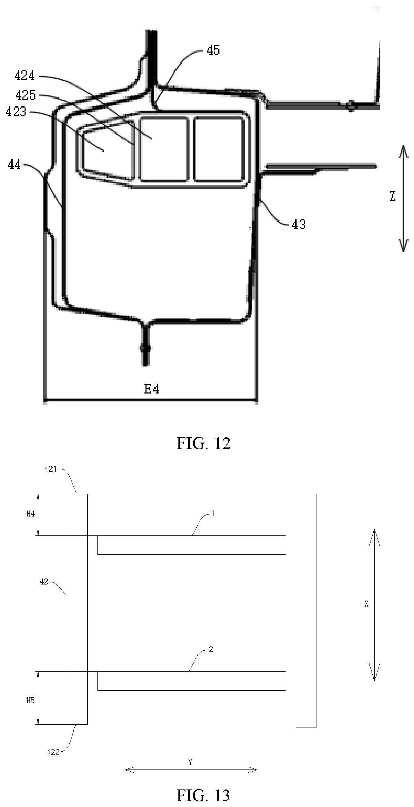

In some embodiments of the present invention, as illustrated in FIG. 13, the seat mounting cross beam 199 may include a front cross beam for front seat mounting 1 and a rear cross beam for front seat mounting 2, and the front cross beam for front seat mounting 1 and the rear cross beam for front seat mounting 2 are spaced apart from each other in a third direction of the vehicle body assembly 100. The third direction may be the length direction of the vehicle, i.e., the X direction illustrated in FIG. 7. As some optional embodiments of the present invention, the front cross beam for front seat mounting 1 may be disposed forward of the rear cross beam for front seat mounting 2.

In the first direction of the vehicle body assembly 100, an overlapping region may exist between the orthographic projection of the reinforcement beam 42 and the front cross beam for front seat mounting 1 of the vehicle, and an overlapping region may exist between the orthographic projection of the reinforcement beam 42 and the rear cross beam for front seat mounting 2 of the vehicle. With this arrangement, when the vehicle experiences the side collision, the reinforcement beam 42 comes into contact with the front cross beam for front seat mounting 1 and the rear cross beam for front seat mounting 2 as the reinforcement beam 42 intrudes towards the inner side of the vehicle. In this way, the front cross beam for front seat mounting 1 and the rear cross beam for front seat mounting 2 can effectively support the reinforcement beam 42, reducing the probability of the reinforcement beam 42 continuing to intrude towards the inner side of the vehicle into the occupant compartment. Thus, the passengers inside the occupant compartment of the vehicle can be reliably protected, which helps improve the safety of the vehicle.

In some embodiments of the present invention, as illustrated in FIG. 13, the reinforcement beam 42 may extend in the third direction (i.e., the length direction of the vehicle, i.e., the X direction illustrated in FIG. 7) and have a first end 421 and a second end 422 opposite to the first end 421. Compared with the second end 422, the first end 421 is closer to the front cross beam for front seat mounting 1. Compared with the first end 421, the second end 422 is closer to the rear cross beam for front seat mounting 2. In the third direction, the first end 421 is spaced apart from the front cross beam for front seat mounting 1, and the second end 422 is spaced apart from the rear cross beam for front seat mounting 2.

It should be understood that, in the width direction of the vehicle (i.e., the Y direction illustrated in FIG. 13), the vehicle may be provided with the side sill beam 40 at each of two sides of the vehicle. The reinforcement beam 42 is disposed in the receiving cavity 41 of each side sill beam 40. Such an arrangement can enable the two reinforcement beams 42, the front cross beam for front seat mounting 1, and the rear cross beam for front seat mounting 2 to form a structure similar to the Chinese character " 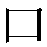 ", allowing the two reinforcement beams 42, the front cross beam for front seat mounting 1, and the rear cross beam for front seat mounting 2 to form a complete force transmission path. When the vehicle experiences the side collision, loads can be effectively transmitted between the two reinforcement beams 42, the front cross beam for front seat mounting 1, and the rear cross beam for front seat mounting 2 to effectively reduce a deformation of the vehicle body. Thus, the passengers inside the occupant compartment of the vehicle can be reliably protected, and the battery pack 5 can be reliably protected.

In some embodiments of the present invention, as illustrated in FIG. 13, a spacing distance between the first end 421 and the front cross beam for front seat mounting 1 may be H4, where H4 may satisfy a relationship: 50 mm≤H4≤70 mm. It should be understood that, in the third direction, the first end 421 of the reinforcement beam 42 is located in front of the front cross beam for front seat mounting 1, and the spacing distance between the first end 421 and the front cross beam for front seat mounting 1 may be any value between 50 mm and 70 mm. For example, H4 may be, but is not limited to, 50 mm, 60 mm, 70 mm, etc.

In some embodiments of the present invention, a spacing distance between the second end 422 and the rear cross beam for front seat mounting 2 may be H5, where H5 may satisfy a relationship: 50 mm≤H5≤70 mm. It should be understood that, in the third direction, the second end 422 of the reinforcement beam 42 is located behind the rear cross beam for front seat mounting 2, and the spacing distance between the second end 422 and the rear cross beam for front seat mounting 2 may be any value between 50 mm and 70 mm. For example, H5 may be, but is not limited to, 50 mm, 60 mm, 70 mm, etc.

In some embodiments of the present invention, the spacing distance between the first end 421 and the front cross beam for front seat mounting 1 may be H4, where H4 may satisfy the relationship: 50 mm≤H4≤70 mm; the spacing distance between the second end 422 and the rear cross beam for front seat mounting 2 may be H5, where H5 may satisfy the relationship: 50 mm≤H5≤70 mm. Such an arrangement can enable the spacing distance between the first end 421 and the front cross beam for front seat mounting 1 to be reasonable and the spacing distance between the second end 422 and the rear cross beam for front seat mounting 2 to be reasonable, which is conducive to enabling effective load transmission between the two reinforcement beams 42, the front cross beam for front seat mounting 1, and the rear cross beam for front seat mounting 2.

In some embodiments of the present invention, as illustrated in FIG. 13, a length of the reinforcement beam 42 may be H6, the side sill beam 40 may extend in the third direction, and a length of the side sill beam 40 may be H7, where H6 and H7 may satisfy a relationship: 0.66H7≤H6≤0.76H7. That is, H6 may be any value between 0.66H7 and 0.76H7. For example, H6 may be, but is not limited to, 0.66H7, 0.71H7, 0.76H7, etc. As a specific embodiment of the present invention, the length of the reinforcement beam 42 may be two-thirds of the length of the side sill beam 40. Such an arrangement can make a proportional relationship between the length of the reinforcement beam 42 and the length of the side sill beam 40 reasonable. In addition, enabling the length of the reinforcement beam 42 to be smaller than the length of the side sill beam 40 helps save a material of the reinforcement beam 42, which is conducive to the lightweight design of the vehicle.

As some optional embodiments of the present invention, the length of the reinforcement beam 42 may be adjusted based on a wheelbase of the vehicle. In this way, a generalization degree of the reinforcement beam 42 can be improved.

In some embodiments of the present invention, as illustrated in FIG. 1 to FIG. 3, the front cross beam for front seat mounting 1 may include a front cross beam body 10, and the vehicle body assembly 100 may include a first mounting member 11.

The front cross beam body 10 is adapted to be connected to the vehicle body. The front cross beam body 10 may extend in the first direction. The first direction may be the width direction of the vehicle (i.e., the Y direction of the vehicle illustrated in FIG. 1). The front cross beam body 10 may be connected to the side sill beam 40 of the vehicle. The front cross beam body 10 has a first mounting portion 101. As some optional embodiments of the present invention, the first mounting portion 101 may be constructed as a second mounting hole 1011, and is adapted to mount a seat of the vehicle. For example, the first mounting portion 101 may be located at a top wall of the front cross beam body 10, and extend through the top wall of the front cross beam body 10 in a thickness direction of the top wall of the front cross beam body 10. By allowing a connection member (e.g., a bolt) to extend through a mounting structure of the seat and the first mounting portion 101 and screwing the connection member to a nut disposed at the front cross beam body 10, the seat of the vehicle can be mounted at the front cross beam body 10.

The first mounting member 11 is detachably disposed at the front cross beam body 10. The first mounting member 11 is detachably connected to the front cross beam body 10. For example, the first mounting member 11 may be bolted or welded to the front cross beam body 10. It should be explained that, even if the first mounting member 11 is welded to the front cross beam body 10, the first mounting member 11 can also be detached from the front cross beam body 10 through cutting or other methods. Therefore, welding the first mounting member 11 to the front cross beam body 10 also belongs to the detachable connection described in the present invention. The first mounting member 11 is adapted to mount the seat. For example, the first mounting member 11 may be connected to the mounting structure of the seat by the connection member (e.g., the bolt).

As some optional embodiments of the present invention, as illustrated in FIG. 2, a top wall of the first mounting member 11 may have an avoidance opening 113 to avoid the connection member (e.g., the bolt).

It should be understood that, compared with mounting the seat via the first mounting portion 101, mounting the first mounting member 11 at the front cross beam body 10 without changing a size of the front cross beam body 10 and then mounting the seat via the first mounting member 11 can raise a height of the seat, considering that the first mounting member 11 has a predetermined height. In an exemplary embodiment of the present invention, when the height of the seat needs to be raised, the first mounting member 11 may be mounted at the front cross beam body 10, and then the seat may be mounted via the first mounting member 11. When the height of the seat needs to be lowered, the first mounting member 11 may not be mounted at the front cross beam body 10, or the first mounting member 11 may be detached from the front cross beam body 10, and then the seat may be directly mounted at the front cross beam body 10. Such an arrangement can enable the front cross beam body 10 of a same size to be compatible with both vehicles requiring high seats and vehicles requiring low seats, allowing the front cross beam body 10 of the same size to adapt to different vehicle models.

Accordingly, by disposing the first mounting portion 101 at the front cross beam body 10 and configuring the first mounting member 11 to be detachably disposed at the front cross beam body 10, the seat of the vehicle may be mounted via the first mounting portion 101 when the height of the seat needs to be lowered, or the first mounting member 11 may be disposed at the front cross beam body 10 and the seat of the vehicle may be mounted via the first mounting member 11 when the height of the seat needs to be raised. Thus, the front cross beam body 10 of the same size can be adapted to different vehicle models, which helps expand an application range of the front cross beam for front seat mounting 1 and improves versatility of the front cross beam for front seat mounting 1.

As some optional embodiments of the present invention, a nut may be provided inside the first mounting member 11. The seat can be mounted at the first mounting member 11 through an engagement between a bolt and the nut.

As some optional embodiments of the present invention, as illustrated in FIG. 1, a plurality of the first mounting members 11 may be provided. For example, four first mounting members 11 may be provided. The four first mounting members 11 may be arranged at intervals in the Y direction illustrated in FIG. 1, with every two first mounting members 11 used for mounting one seat.

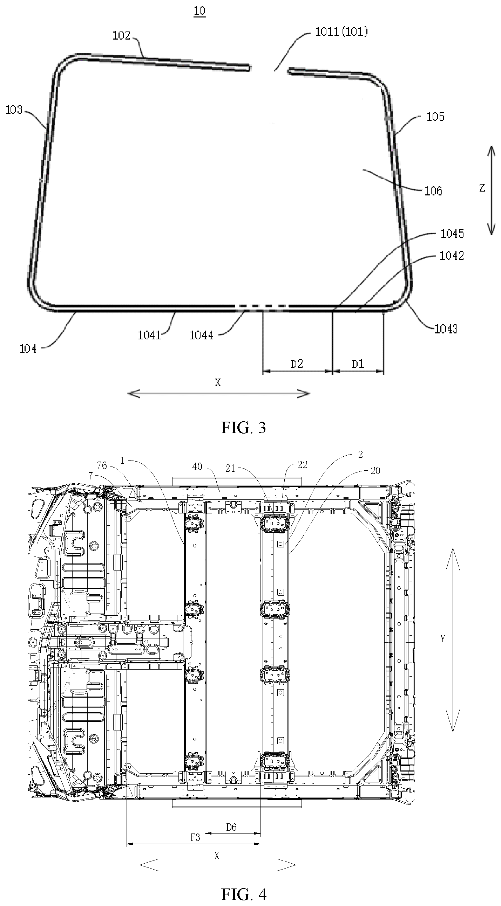

In some embodiments of the present invention, as illustrated in FIG. 3, the front cross beam body 10 may include a front cross beam top wall 102, a front cross beam front side wall 103, a front cross beam bottom wall 104, and a front cross beam rear side wall 105 that are sequentially connected. A front cross beam cavity 106 is defined by the front cross beam top wall 102, the front cross beam front side wall 103, the front cross beam bottom wall 104, and the front cross beam rear side wall 105 together. In an exemplary embodiment of the present invention, the front cross beam top wall 102 has an end that may be connected to an end of the front cross beam front side wall 103, the front cross beam front side wall 103 has another end that may be connected to an end of the front cross beam bottom wall 104, the front cross beam bottom wall 104 has another end that may be connected to an end of the front cross beam rear side wall 105, and the front cross beam rear side wall 105 has another end that may be connected to another end of the front cross beam top wall 102. A cross-section of the front cross beam body 10 may be a complete closed section. Such an arrangement can enhance structural strength of the front cross beam body 10.

The first mounting portion 101 and the first mounting member 11 can both be disposed at the front cross beam top wall 102. As some optional embodiments of the present invention, the first mounting portion 101 may be constructed as the second mounting hole 1011 and arranged to extend through the front cross beam top wall 102. The first mounting member 11 may be disposed at the front cross beam top wall 102. As some optional embodiments of the present invention, the first mounting member 11 may be disposed at an outer surface of the front cross beam top wall 102. Such an arrangement can allow for reasonable positioning of the first mounting portion 101 and the first mounting member 11, which helps lower difficulty of mounting the seat of the vehicle.

As some optional embodiments of the present invention, as illustrated in FIG. 2, the first mounting member 11 may have a plurality of third connection flanges 111 and a plurality of fourth connection flanges 112. The plurality of third connection flanges 111 may be connected to the front cross beam top wall 102 by means including, but not limited to, bolting or welding. A part of the plurality of fourth connection flanges 112 may be connected to the front cross beam front side wall 103 by means including, but not limited to, bolting or welding, while another part of the plurality of fourth connection flanges 112 may be connected to the front cross beam rear side wall 105 by means including, but not limited to, bolting or welding. Such an arrangement can lower difficulty of mounting the first mounting member 11 and enhance connection strength between the first mounting member 11 and the front cross beam body 10.

As some optional embodiments of the present invention, a wall thickness of each of the front cross beam top wall 102, the front cross beam front side wall 103, the front cross beam bottom wall 104, and the front cross beam rear side wall 105 may be 1.4 mm. As some optional embodiments of the present invention, the front cross beam body 10 may be made of, but is not limited to, first-generation DP high-strength steel HC1000/1470DP.

As some optional embodiments of the present invention, the front cross beam body 10 may be an integrally-formed part. It should be explained that a conventional seat cross beam generally includes a left front seat cross beam, a right front seat cross beam, and a middle cross beam, which are then welded together to form the seat cross beam. This type of seat cross beam has a complex structure and cannot reliably transmit the collision force of the vehicle, i.e., has unsatisfactory force transmission performance. In contrast, in the present invention, the front cross beam body 10 may be the integrally-formed part. Such an arrangement can enhance the structural strength of the front cross beam body 10, improve torsional stiffness of the vehicle body, and enable the front cross beam body 10 to effectively transmit the collision force during both frontal (X-direction) collisions and side (Y-direction) collisions. Consequently, a degree of crumpling of the occupant compartment of the vehicle can be reduced, which is beneficial for safeguarding safety of passengers and improves safety performance of the vehicle.

In addition, constructing the front cross beam body 10 as the integrally-formed part reduces a quantity of parts, saves costs associated with part molds and welding tooling development, and reduces labor time, which helps lower production costs of the front cross beam for front seat mounting 1. As some optional embodiments of the present invention, the front cross beam body 10 may be a roll-formed cross beam.

As some optional embodiments of the present invention, each of the front cross beam front side wall 103 and the front cross beam rear side wall 105 may have a plurality of harness mounting holes, through which harnesses of the vehicle can pass. Such an arrangement can lower wiring difficulty of the vehicle.

In some embodiments of the present invention, as illustrated in FIG. 3, in a direction from the front cross beam front side wall 103 to the front cross beam rear side wall 105, the front cross beam top wall 102 may gradually incline towards the front cross beam rear side wall 105. In an exemplary embodiment of the present invention, in the X direction illustrated in FIG. 3, and in the direction from the front cross beam front side wall 103 to the front cross beam rear side wall 105, the front cross beam top wall 102 may gradually incline towards the front cross beam rear side wall 105. Such an arrangement can enable the front cross beam top wall 102 to match a slide rail of the seat, which helps lower the difficulty of mounting the seat.

In some embodiments of the present invention, as illustrated in FIG. 3, the front cross beam bottom wall 104 may include a first sub-bottom wall 1041 and a second sub-bottom wall 1042. The first sub-bottom wall 1041 has an end that may be connected to the front cross beam front side wall 103 and another end that may be connected to an end of the second sub-bottom wall 1042. The second sub-bottom wall 1042 has another end that may be connected to the front cross beam rear side wall 105 to form a fillet 1043. A spacing distance between the fillet 1043 and a first connection 1045 between the first sub-bottom wall 1041 and the second sub-bottom wall 1042 may be D1, where D1 may satisfy a relationship: 5 mm≤D1≤20 mm. That is, D1 may be any value between 5mm and 20mm. For example, D1 may be, but is not limited to, 5 mm, 10 mm, 12 mm, 15 mm, 20 mm, etc. Such an arrangement can enable the spacing distance between the fillet 1043 and the first connection 1045 between the first sub-bottom wall 1041 and the second sub-bottom wall 1042 to be reasonable, which is beneficial to enhancing the structural strength of the front cross beam body 10. In addition, setting the first connection 1045 between the first sub-bottom wall 1041 and the second sub-bottom wall 1042 at the front cross beam bottom wall 104 is also beneficial to enhancing the structural strength of the front cross beam body 10, enabling the front cross beam body 10 to effectively transmit the collision force.

As some optional embodiments of the present invention, the first sub-bottom wall 1041 and the second sub-bottom wall 1042 may be welded through laser welding. The laser welding can keep the front cross beam bottom wall 104 flat, which is beneficial to ensuring flatness of the front cross beam bottom wall 104. It should be explained that the front cross beam body 10 may be integrally formed. After the front cross beam body 10 is formed, the first sub-bottom wall 1041 and the second sub-bottom wall 1042 may be welded together through laser welding to construct the complete closed section of the front cross beam body 10.

In some embodiments of the present invention, as illustrated in FIG. 3, in a direction from the front cross beam bottom wall 104 to the front cross beam top wall 102, a spacing distance between the front cross beam front side wall 103 and the front cross beam rear side wall 105 gradually decreases. In an exemplary embodiment of the present invention, in the Z direction illustrated in FIG. 3, and in the direction from the front cross beam bottom wall 104 to the front cross beam top wall 102, the spacing distance between the front cross beam front side wall 103 and the front cross beam rear side wall 105 gradually decreases.

As some optional embodiments of the present invention, the front cross beam front side wall 103 may be parallel to the Z direction illustrated in FIG. 3. In the Z direction illustrated in FIG. 3, and in the direction from the front cross beam bottom wall 104 to the front cross beam top wall 102, the front cross beam rear side wall 105 is arranged to gradually approach the front cross beam front side wall 103.

As some optional embodiments of the present invention, the front cross beam rear side wall 105 may be parallel to the Z direction illustrated in FIG. 3. In the Z direction illustrated in FIG. 3, and in the direction from the front cross beam bottom wall 104 to the front cross beam top wall 102, the front cross beam front side wall 103 is arranged to gradually approach the front cross beam rear side wall 105.

As some optional embodiments of the present invention, as illustrated in FIG. 3, in the Z direction illustrated in FIG. 3, and in the direction from the front cross beam bottom wall 104 to the front cross beam top wall 102, the front cross beam front side wall 103 is arranged to gradually approach the front cross beam rear side wall 105, and the front cross beam rear side wall 105 is arranged to gradually approach the front cross beam front side wall 103. Such an arrangement is beneficial to further enhancing the structural strength of the front cross beam body 10.

In some embodiments of the present invention, as illustrated in FIG. 3, at least one of the outer surface of the front cross beam top wall 102, an outer surface of the front cross beam front side wall 103, an outer surface of the front cross beam bottom wall 104, and an outer surface of the front cross beam rear side wall 105 is a flat surface. As some optional embodiments of the present invention, as illustrated in FIG. 3, each of the outer surface of the front cross beam top wall 102, the outer surface of the front cross beam front side wall 103, the outer surface of the front cross beam bottom wall 104, and the outer surface of the front cross beam rear side wall 105 is a flat surface. Such an arrangement can enable an outer surface of the front cross beam body 10 to be flat, which can reduce difficulty of mounting the front cross beam body 10, and enable uniform and smooth force transmission through the front cross beam body 10.

In some embodiments of the present invention, the front cross beam bottom wall 104 may be provided with a second mounting portion at an inner wall of the front cross beam bottom wall 104. The second mounting portion may be arranged corresponding to the first mounting portion 101. As some optional embodiments of the present invention, the second mounting portion may be constructed as a nut. In a case where the seat is mounted without the first mounting member 11, the connection member (e.g., a bolt) can be enabled to extend through the mounting structure of the seat and the first mounting portion 101 and screwed to the second mounting portion, to mount the seat of the vehicle at the front cross beam body 10.

A spacing distance between the second mounting portion and the first connection 1045 between the first sub-bottom wall 1041 and the second sub-bottom wall 1042 may be D2, where D2 may satisfy a relationship: 5 mm≤D2≤20 mm. That is, D2 may be any value between 5 mm and 20 mm. For example, D2 may be, but is not limited to, 5 mm, 10 mm, 12 mm, 15 mm, 20 mm, etc. Such an arrangement can enable the spacing distance between the second mounting portion and the first connection 1045 between the first sub-bottom wall 1041 and the second sub-bottom wall 1042 to be reasonable, which is beneficial to enhancing the structural strength of the front cross beam body 10.

In some embodiments of the present invention, as illustrated in FIG. 1 and FIG. 2, the front cross beam bottom wall 104 may have a first avoidance hole 1044 opposite to the second mounting portion. The first avoidance hole 1044 can be used to avoid the connection member. For example, in a case where the seat is mounted without the first mounting member 11, the connection member (e.g., a bolt) can be enabled to extend through the mounting structure of the seat and the first mounting portion 101, screwed to the second mounting portion, to mount the seat of the vehicle at the front cross beam body 10, and can pass through the first avoidance hole 1044. Such an arrangement can lower the difficulty of mounting the seat and improve mounting stability of the seat.

As some optional embodiments of the present invention, as illustrated in FIG. 3, D2 can also be understood as a spacing distance between a center of the first avoidance hole 1044 and the first connection 1045 between the first sub-bottom wall 1041 and the second sub-bottom wall 1042.

In some embodiments of the present invention, as illustrated in FIG. 1 and FIG. 2, the front cross beam for front seat mounting 1 may further include a front cross beam connection member 12. The front cross beam connection member 12 may be disposed at an end of the front cross beam body 10. The front cross beam connection member 12 is connected to the side sill beam 40 of the vehicle.

The front cross beam body 10 may extend in the first direction. The first direction may be the width direction of the vehicle (i.e., the Y direction of the vehicle). In the first direction, the front cross beam body 10 may be provided with the front cross beam connection member 12 at each of two ends of the front cross beam body 10. The front cross beam connection member 12 may be connected to the side sill beam 40 of the vehicle by means including, but not limited to, welding, bolting, or the like.

As some optional embodiments of the present invention, as illustrated in FIG. 2, the front cross beam connection member 12 may have a plurality of fifth connection flanges 121. The fifth connection flange 121 may be connected to the side sill beam 40 by means including, but not limited to, bolting or welding. As some optional embodiments of the present invention, the fifth connection flange 121 may be connected to the inner side sill panel 43 of the side sill beam 40 by means including, but not limited to, bolting or welding. Such an arrangement can simplify a connection between the front cross beam body 10 and the side sill beam 40, reducing mounting difficulty between the front cross beam body 10 and the vehicle body.

In some embodiments of the present invention, as illustrated in FIG. 1 and FIG. 2, a spacing distance between the front cross beam body 10 and the corresponding side sill beam 40 may be D3, where D3 may satisfy a relationship: 3 mm≤D3≤7 mm. It should be explained that each of the two ends of the front cross beam body 10 has the side sill beam 40. A spacing distance between an end of the front cross beam body 10 and the corresponding side sill beam 40 may be D3. D3 may be any value between 3 mm and 7 mm. For example, D3 may be, but is not limited to, 3 mm, 5 mm, 7 mm, etc. Such an arrangement can enable the spacing distance between the front cross beam body 10 and the side sill beam 40 to be reasonable. By designing D3 as any value between 3 mm and 7 mm, high connection strength between the front cross beam body 10 and the side sill beam 40 can be ensured. During the side collision of the vehicle, the side sill beam 40 is impacted and intrudes towards the front cross beam body 10. However, due to the spacing distance between the front cross beam body 10 and the corresponding side sill beam 40, a predetermined intrusion can be absorbed, which helps reduce the collision force received by the front cross beam body 10.

As some optional embodiments of the present invention, a spacing distance between the front cross beam body 10 and the inner side sill panel 43 of the corresponding side sill beam 40 may be D3.

In some embodiments of the present invention, as illustrated in FIG. 1 and FIG. 2, the vehicle body assembly 100 may further include a sealing component 7. The sealing component 7 may be connected to the inner side sill panel 43.

The front cross beam body 10 may be located above the seal 71 and connected to the seal 71. In some embodiments of the present invention, the front cross beam connection member 12 may be connected to the seal 71. In some embodiments of the present invention, the front cross beam body 10 may be located above the seal 71 and connected to the seal 71, and the front cross beam connection member 12 may be connected to the seal 71.

As some optional embodiments of the present invention, as illustrated in FIG. 2, the front cross beam connection member 12 may have a plurality of sixth connection flanges 122. The sixth connection flange 122 may be connected to the seal 71 by means including, but not limited to, bolting or welding.

In this way, the seal 71, the front cross beam body 10, and the side sill beam 40 can be connected together, which is beneficial to enhancing the structural strength of the vehicle body.

In some embodiments of the present invention, the front cross beam body 10 may be spaced apart from the battery pack 5. As some optional embodiments of the present invention, in the height direction of the vehicle, the front cross beam body 10 may be disposed above the battery pack and spaced apart from the battery pack 5. A spacing distance between the front cross beam body 10 and the battery pack 5 may be D4, where D4 may satisfy a relationship: 5 mm≤D4≤11 mm. That is, D4 may be any value between 5 mm and 11 mm. For example, D4 may be, but is not limited to, 5 mm, 8 mm, 11 mm, etc. Such an arrangement can allow for a safe gap between the front cross beam body 10 and the battery pack 5, which can prevent the force received by the front cross beam body 10 from being transmitted to the battery pack 5 through the front cross beam body 10, helping ensure operational safety of the battery pack.

In some embodiments of the present invention, as illustrated in FIG. 1, each of the front cross beam top wall 102 and the front cross beam front side wall 103 may be connected to a center tunnel 9 of the vehicle body assembly 100. That is, the center tunnel 9 may be connected to the front cross beam top wall 102, and the center tunnel 9 may also be connected to the front cross beam front side wall 103. In this way, the center tunnel 9 can be connected to the front cross beam body 10. When the vehicle experiences a frontal collision, the collision force can be transmitted through the center tunnel 9 to the front cross beam body 10. The front cross beam body 10 can decompose the collision force transmitted through the center tunnel 9 in the Y direction, which is beneficial to improving safety of the vehicle body.

In some embodiments of the present invention, as illustrated in FIG. 1, a spacing distance between the front cross beam body 10 and the rear cross beam for front seat mounting 2 may be D6. D6 may be any value between 250 mm and 265 mm. Such an arrangement can enable the spacing distance between the front cross beam body 10 and the rear cross beam for front seat mounting 2 to be reasonable.

In some embodiments of the present invention, the rear cross beam for front seat mounting 2 includes a rear cross beam body 20. The rear cross beam body 20 may be arranged to extend in the width direction of the vehicle (i.e., the Y direction illustrated in FIG. 4), and may be connected to the side sill beam 40 of the vehicle. The rear cross beam body 20 is integrally formed, meaning that the rear cross beam body 20 is an integrally-formed part. Constructing the rear cross beam body 20 as the integrally-formed part reduces a quantity of parts, saves costs associated with part molds and welding tooling development, and reduces labor time, which helps lower production costs of the rear cross beam for front seat mounting 2. In addition, by constructing the rear cross beam body 20 as the integrally-formed part, structural strength of the rear cross beam body 20 can be enhanced, and the torsional stiffness of the vehicle body can also be improved. The rear cross beam body 20 can effectively transmit the collision force during both frontal (X-direction) collisions and side (Y-direction) collisions. Consequently, the degree of crumpling of the occupant compartment of the vehicle can be reduced, which is beneficial for safeguarding the safety of passengers and improves the safety performance of the vehicle.

As some optional embodiments of the present invention, the rear cross beam body 20 may be a roll-formed cross beam.

The rear cross beam body 20 defines a plurality of rear cross beam cavities 201. The plurality of rear cross beam cavities 201 are arranged in the third direction of the rear cross beam for front seat mounting 2. The third direction may be the length direction of the vehicle (i.e., the X direction illustrated in FIG. 6). That is, the plurality of rear cross beam cavities 201 are arranged in the length direction of the vehicle. At least two adjacent rear cross beam cavities 201 of the plurality of rear cross beam cavities 201 are spaced apart from each other. As some optional embodiments of the present invention, every two adjacent rear cross beam cavities 201 among the plurality of rear cross beam cavities 201 are spaced apart from each other. By enabling the rear cross beam body 20 to define the plurality of rear cross beam cavities 201 arranged in the third direction, structural strength of the rear cross beam for front seat mounting 2 can be enhanced.

Thus, by constructing the rear cross beam body 20 as the integrally-formed part, the quantity of parts is reduced, and a structure of the rear cross beam for front seat mounting 2 is simplified, which helps lower the production cost of the rear cross beam for front seat mounting 2. In addition, by constructing the rear cross beam body 20 as the integrally formed part and enabling the rear cross beam body 20 to define the plurality of rear cross beam cavities 201 arranged in the third direction, the structural strength of the rear cross beam for front seat mounting 2 can be enhanced, which allows the rear cross beam for front seat mounting 2 to reliably transmit the collision force of the vehicle, improving the safety of the vehicle.

In some embodiments of the present invention, as illustrated in FIG. 6, the rear cross beam body 20 may include a rear cross beam top wall 202, a rear cross beam front side wall 203, a rear cross beam bottom wall 204, and a rear cross beam rear side wall 205 that are sequentially connected. In an exemplary embodiment of the present invention, the rear cross beam top wall 202 has an end that may be connected to an end of the rear cross beam front side wall 203, the rear cross beam front side wall 203 has another end that may be connected to an end of the rear cross beam bottom wall 204, the rear cross beam bottom wall 204 has another end that may be connected to an end of the rear cross beam rear side wall 205, and the rear cross beam rear side wall 205 has another end that may be connected to another end of the rear cross beam top wall 202. The rear cross beam bottom wall 204 may be connected to the rear cross beam top wall 202 to allow the plurality of rear cross beam cavities 201 to be defined by the rear cross beam body 20. Such an arrangement can enhance the structural strength of the rear cross beam body 20.

As some optional embodiments of the present invention, a cross-section of the rear cross beam body 20 may be a complete closed section.

As some optional embodiments of the present invention, a wall thickness of each of the rear cross beam top wall 202, the rear cross beam front side wall 203, the rear cross beam bottom wall 204, and the rear cross beam rear side wall 205 may be 1.6 mm. As some optional embodiments of the present invention, the rear cross beam body 20 may be made of, but is not limited to, first-generation DP high-strength steel HC1000/1470DP.

In some embodiments of the present invention, as illustrated in FIG. 6, the rear cross beam bottom wall 204 may have at least one second recess 2041. The second recess 2041 may be recessed towards the rear cross beam top wall 202. In addition, the second recess 2041 may be connected to the rear cross beam top wall 202 to allow the plurality of rear cross beam cavities 201 to be defined by the rear cross beam body 20.

A bottom wall of the second recess 2041 may be connected to the rear cross beam top wall 202. In an exemplary embodiment of the present invention, the bottom wall of the second recess 2041 may be connected to an inner surface of the rear cross beam top wall 202. One second recess 2041 may be formed, or a plurality of second recesses 2041 may be formed. One second recess 2041 may cause the rear cross beam body 20 to define two rear cross beam cavities 201; two second recesses 2041 may cause the rear cross beam body 20 to define three rear cross beam cavities 201; N second recesses 2041 may cause the rear cross beam body 20 to define (N+1) rear cross beam cavities 201. By enabling the rear cross beam bottom wall 204 to have at least one second recess 2041, and by enabling the second recess 2041 to be recessed towards the rear cross beam top wall 202 and connected to the rear cross beam top wall 202, the rear cross beam body 20 can define the plurality of rear cross beam cavities 201, which can enhance the structural strength of the rear cross beam body 20 to enable the rear cross beam body 20 to reliably transmit the collision force of the vehicle, improving the safety of the vehicle. In addition, such an arrangement requires no additional structures such as partition plates to define the cavities, which is beneficial for simplifying a structure of the rear cross beam body 20 and reducing production difficulty of the rear cross beam body 20.

As some optional embodiments of the present invention, the plurality of rear cross beam cavities 201 defined by the rear cross beam body 20 may be arranged at intervals in the length direction of the vehicle. With such an arrangement, when the vehicle experiences the frontal collision, the rear cross beam body 20 can achieve multi-stage crumpling and energy absorption, which is conducive to improving frontal collision performance of the vehicle.

In some embodiments of the present invention, as illustrated in FIG. 6, in the third direction, a spacing distance between two opposite side walls of the second recess 2041 may be G1, where G1 may satisfy a relationship: 18 mm≤G1≤28 mm.

It should be understood that the second recess 2041, which is recessed towards the rear cross beam top wall 202, may have a bottom wall and two opposite side walls respectively connected to two ends of the bottom wall. In the third direction (i.e., the length direction of the vehicle, i.e., the X direction of the vehicle), the spacing distance between the two opposite side walls of the second recess 2041 may be G1. G1 may be any value between 18 mm and 28 mm. For example, G1 may be, but is not limited to, 18 mm, 23 mm, 28 mm, etc. With such an arrangement, the spacing distance between the two opposite side walls of the second recess 2041 can be reasonable, and a spacing distance between the two rear cross beam cavities 201 separated by the second recess 2041 can be reasonable, which is beneficial for enhancing the structural strength of the rear cross beam body 20 and improving a force transmission capability of the rear cross beam body 20.

In some embodiments of the present invention, as illustrated in FIG. 6, the rear cross beam bottom wall 204 may include a third sub-bottom wall 2042 and a fourth sub-bottom wall 2043. The third sub-bottom wall 2042 is connected to the fourth sub-bottom wall 2043. In an exemplary embodiment of the present invention, the third sub-bottom wall 2042 has an end that may be connected to the rear cross beam front side wall 203 and another end that may be connected to an end of the fourth sub-bottom wall 2043. The fourth sub-bottom wall 2043 has another end that may be connected to the rear cross beam rear side wall 205. In addition, a second connection 2044 between the third sub-bottom wall 2042 and the fourth sub-bottom wall 2043 may be located in the second recess 2041. For example, the second connection 2044 between the third sub-bottom wall 2042 and the fourth sub-bottom wall 2043 may be located at one of the two opposite side walls of the second recess 2041, or the second connection 2044 between the third sub-bottom wall 2042 and the fourth sub-bottom wall 2043 may be located at the bottom wall of the second recess 2041. Such an arrangement can allow for reasonable positioning of the second connection 2044 between the third sub-bottom wall 2042 and the fourth sub-bottom wall 2043, which is conducive to enhancing the structural strength of the rear cross beam body 20. Additionally, by disposing the second connection 2044 between the third sub-bottom wall 2042 and the fourth sub-bottom wall 2043 in the second recess 2041, welding operations can be performed within a space defined by the bottom wall and the two side walls of the second recess 2041, which helps reduce manufacturing difficulty of the rear cross beam body 20.

It should be noted that, whether in the frontal collision or the side collision, a force received by the second recess 2041 is relatively small. By disposing the second connection 2044 between the third sub-bottom wall 2042 and the fourth sub-bottom wall 2043 in the second recess 2041, a reduction of a force on the second connection 2044 between the third sub-bottom wall 2042 and the fourth sub-bottom wall 2043 can be facilitated, which is beneficial for improving impact resistance of the rear cross beam body 20 and reducing a probability of cracking at the second connection 2044 between the third sub-bottom wall 2042 and the fourth sub-bottom wall 2043.

It should be understood that, a part of a structure of the third sub-bottom wall 2042 is constructed as a part of a structure of the second recess 2041, and a part of a structure of the fourth sub-bottom wall 2043 is constructed as another part of the structure of the second recess 2041.

In some embodiments of the present invention, as illustrated in FIG. 6, the second connection 2044 may be located at the bottom wall of the second recess 2041. In an exemplary embodiment of the present invention, the second connection 2044 between the third sub-bottom wall 2042 and the fourth sub-bottom wall 2043 may be located at the bottom wall of the second recess 2041. Such an arrangement can allow for even more reasonable positioning of the second connection 2044 between the third sub-bottom wall 2042 and the fourth sub-bottom wall 2043, further enhancing the structural strength of the rear cross beam body 20.

As an optional embodiment of the present invention, the third sub-bottom wall 2042 and the fourth sub-bottom wall 2043 may be welded through roll-spot welding. It should be explained that the rear cross beam body 20 may be integrally formed. After the rear cross beam body 20 is formed, the third sub-bottom wall 2042 and the fourth sub-bottom wall 2043 may be welded together through the roll-spot welding to construct a complete closed section of the rear cross beam body 20.

In some embodiments of the present invention, as illustrated in FIG. 6, in the third direction, and in a direction from the rear cross beam front side wall 203 to the rear cross beam rear side wall 205, the rear cross beam top wall 202 may incline towards the rear cross beam bottom wall 204. In an exemplary embodiment of the present invention, in the X direction illustrated in FIG. 6, and in the direction from the rear cross beam front side wall 203 to the rear cross beam rear side wall 205, the rear cross beam top wall 202 may gradually incline towards the rear cross beam rear side wall 205. Such an arrangement can enable the rear cross beam top wall 202 to match the slide rail of the seat, which helps lower the difficulty of mounting the seat. In addition, the rear cross beam for front seat mounting 2 may be used for mounting a front seat of the vehicle.

In addition, by constructing the rear cross beam top wall 202 to gradually incline towards the rear cross beam bottom wall 204 in the third direction and in the direction from the rear cross beam front side wall 203 to the rear cross beam rear side wall 205, an increase in a space for rear passengers is facilitated. In an exemplary embodiment of the present invention, an increase in a space for rear passengers to place their legs and feet is facilitated, which is therefore beneficial for improving riding comfort for rear passengers, enhancing riding experience of the rear passengers.

In some embodiments of the present invention, as illustrated in FIG. 6, the rear cross beam top wall 202 may include a first sub-top wall 2021 and a second sub-top wall 2022. The first sub-top wall 2021 is connected to the second sub-top wall 2022. In an exemplary embodiment of the present invention, the first sub-top wall 2021 has an end that may be connected to the rear cross beam front side wall 203 and another end that may be connected to an end of the second sub-top wall 2022, and the second sub-top wall 2022 has another end that may be connected to the rear cross beam rear side wall 205. Further, an inclination slope of the second sub-top wall 2022 may be greater than an inclination slope of the first sub-top wall 2021.

In the third direction, and in the direction from the rear cross beam front side wall 203 to the rear cross beam rear side wall 205, the second sub-top wall 2022 may incline towards the rear cross beam bottom wall 204, and the first sub-top wall 2021 may also incline towards the rear cross beam bottom wall 204. The first sub-top wall 2021 may match the slide rail of the seat. By inclining the first sub-top wall 2021 towards the rear cross beam bottom wall 204, a reduction of the difficulty of mounting the seat is facilitated.

By inclining the second sub-top wall 2022 towards the rear cross beam bottom wall 204, the space for rear passengers can be increased. In an exemplary embodiment of the present invention, the space for rear passengers to place their legs and feet can be increased, which is therefore beneficial for improving the riding comfort for rear passengers, enhancing the riding experience of the rear passengers. In addition, by enabling the inclination slope of the second sub-top wall 2022 to be greater than that of the first sub-top wall 2021, the space for rear passengers to place their legs and feet can be effectively increased, which is beneficial for further improving the riding comfort for rear passengers, and also makes a structural form of the rear cross beam top wall 202 reasonable.

In some embodiments of the present invention, as illustrated in FIG. 6, an angle between the second sub-top wall 2022 and the first sub-top wall 2021 may be a, where a may satisfy a relationship 166°≤**a**≤179°. That is, a may be any angle between 166° and 179°. For example, a may be, but is not limited to, 166°, 173°, 179°, etc. By setting the angle a between the second sub-top wall 2022 and the first sub-top wall 2021 to be any angle between 166° and 179°, the angle between the second sub-top wall 2022 and the first sub-top wall 2021 can be reasonable, which can therefore enable the rear cross beam top wall 202 to match the slide rail of the seat, and is beneficial to increasing the space for rear passengers to place their feet without affecting the structural strength of the rear cross beam body 20.

In some embodiments of the present invention, as illustrated in FIG. 6, in a direction from the rear cross beam top wall 202 to the rear cross beam bottom wall 204, a spacing distance between the rear cross beam front side wall 203 and the rear cross beam rear side wall 205 can gradually increase. That is, in a direction from the rear cross beam bottom wall 204 to the rear cross beam top wall 202, the spacing distance between the rear cross beam front side wall 203 and the rear cross beam rear side wall 205 can gradually decrease. In an exemplary embodiment of the present invention, in the Z direction illustrated in FIG. 6, and in the direction from the rear cross beam bottom wall 204 to the rear cross beam top wall 202, the spacing distance between the rear cross beam front side wall 203 and the rear cross beam rear side wall 205 gradually decreases.

As some optional embodiments of the present invention, the rear cross beam front side wall 203 may be parallel to the Z direction illustrated in FIG. 6. In the Z direction illustrated in FIG. 6, and in the direction from the rear cross beam bottom wall 204 to the rear cross beam top wall 202, the rear cross beam rear side wall 205 is arranged to gradually approach the rear cross beam front side wall 203.

As some optional embodiments of the present invention, the rear cross beam rear side wall 205 may be parallel to the Z direction illustrated in FIG. 6. In the Z direction illustrated in FIG. 6, and in the direction from the rear cross beam bottom wall 204 to the rear cross beam top wall 202, the rear cross beam front side wall 203 is arranged to gradually approach the rear cross beam rear side wall 205.

As some optional embodiments of the present invention, as illustrated in FIG. 6, in the Z direction illustrated in FIG. 6, and in the direction from the rear cross beam bottom wall 204 to the rear cross beam top wall 202, the rear cross beam front side wall 203 is arranged to gradually approach the rear cross beam rear side wall 205, and the rear cross beam rear side wall 205 is arranged to gradually approach the rear cross beam front side wall 203. Such an arrangement is conducive to further enhancing the structural strength of the rear cross beam body 20.

In some embodiments of the present invention, as illustrated in FIG. 6, the rear cross beam bottom wall 204 may have one second recess 2041. The second recess 2041 may have a first side wall close to the rear cross beam front side wall 203 and a second side wall away from the rear cross beam front side wall 203. A spacing distance between the rear cross beam front side wall 203 and the first side wall is smaller than a spacing distance between the rear cross beam rear side wall 205 and the second side wall.

In other words, the rear cross beam body 20 can define two rear cross beam cavities 201 arranged in the third direction. In the third direction, an X-direction length of the rear cross beam cavity 201 close to the rear cross beam front side wall 203 is smaller than an X-direction length of the rear cross beam cavity 201 away from the rear cross beam front side wall 203. Such an arrangement can enable the X-direction lengths of the two rear cross beam cavities 201 to be reasonable, which is beneficial for improving the impact resistance of the rear cross beam body 20.

In some embodiments of the present invention, as illustrated in FIG. 4 and FIG. 5, the rear cross beam body 20 may be provided with a rear cross beam connection member 22 at an end of the rear cross beam body 20. In an exemplary embodiment of the present invention, the rear cross beam body 20 may be provided with the rear cross beam connection member 22 at each of two ends of the rear cross beam body 20. The rear cross beam body 20 may extend in the width direction of the vehicle (i.e., the Y direction of the vehicle). The rear cross beam connection member 22 may be connected to the side sill beam 40 of the vehicle by means including, but not limited to, welding or bolting.

As some optional embodiments of the present invention, as illustrated in FIG. 5, the rear cross beam connection member 22 may have a plurality of ninth connection flanges 221. The ninth connection flange 221 may be connected to the side sill beam 40 by means including, but not limited to, bolting or welding. As some optional embodiments of the present invention, the ninth connection flange 221 may be connected to the inner side sill panel of the side sill beam 40 by means including, but not limited to, bolting or welding. Such an arrangement can enable a convenient connection between the rear cross beam body 20 and the side sill beam 40.

In some embodiments of the present invention, as illustrated in FIG. 6, at least one of an outer surface of the rear cross beam top wall 202, an outer surface of the rear cross beam front side wall 203, an outer surface of the rear cross beam bottom wall 204, and an outer surface of the rear cross beam rear side wall 205 is a flat surface. As some optional embodiments of the present invention, as illustrated in FIG. 6, each of the outer surface of the rear cross beam top wall 202, the outer surface of the rear cross beam front side wall 203, and the outer surface of the rear cross beam rear side wall 205 is a flat surface. Such an arrangement can enable an outer surface of the rear cross beam body 20 to be flat, which can reduce difficulty of mounting the rear cross beam body 20, and enable uniform and smooth force transmission through the rear cross beam body 20.

In some embodiments of the present invention, as illustrated in FIG. 4 and FIG. 5, the rear cross beam connection member 22 may be connected to the side sill beam 40 of the vehicle body. In an exemplary embodiment of the present invention, the rear cross beam connection member 22 may be connected to the corresponding side sill beam 40. A spacing distance between the rear cross beam body 20 and the corresponding side sill beam 40 may be F1, where F1 may satisfy a relationship: 3 mm≤F1≤7 mm. It should be explained that each of the two ends of the rear cross beam body 20 has the side sill beam 40. A spacing distance between an end of the rear cross beam body 20 and the corresponding side sill beam 40 may be F1. F1 may be any value between 3 mm and 7 mm. For example, F1 may be, but is not limited to, 3 mm, 5 mm, 7 mm, etc. Such an arrangement can enable the spacing distance between the rear cross beam body 20 and the side sill beam 40 to be reasonable. By designing F1 as any value between 3 mm and 7 mm, high connection strength between the rear cross beam body 20 and the side sill beam 40 can be ensured. During the side collision of the vehicle, the side sill beam 40 is impacted and intrudes towards the rear cross beam body 20. However, due to the spacing distance between the rear cross beam body 20 and the corresponding side sill beam 40, a predetermined intrusion can be absorbed, which helps reduce the collision force received by the rear cross beam body 20.

As some optional embodiments of the present invention, a spacing distance between the rear cross beam body 20 and the inner side sill panel 43 of the corresponding side sill beam 40 may be F1.

In some embodiments of the present invention, as illustrated in FIG. 4 and FIG. 5, the rear cross beam body 20 may be located above the seal 71 and connected to the seal 71. In some embodiments of the present invention, the rear cross beam connection member 22 may be connected to the seal 71. In some embodiments of the present invention, the rear cross beam body 20 may be located above the seal 71 and connected to the seal 71, and the rear cross beam connection member 22 may be connected to the seal 71.

As some optional embodiments of the present invention, as illustrated in FIG. 5, the rear cross beam connection member 22 may have a plurality of tenth connection flanges 222. The tenth connection flange 222 may be connected to the seal 71 by means including, but not limited to, bolting or welding.

In this way, the seal 71, the rear cross beam body 20, and the side sill beam 40 can be connected together, which is beneficial to enhancing the structural strength of the vehicle body.

In some embodiments of the present invention, as illustrated in FIG. 18, the rear cross beam body 20 may be mounted above the battery pack 5 and connected to the battery pack 5.

As some optional embodiments of the present invention, the rear cross beam body 20 may be spaced apart from the battery pack 5.

As some optional embodiments of the present invention, the rear cross beam body 20 and the battery pack 5 may be connected by means including, but not limited to, bolting or welding. By arranging the rear cross beam body 20 above the battery pack 5 and connecting the rear cross beam body 20 to the battery pack 5, the rear cross beam body 20 and beams inside the battery pack 5 can form two transmission paths when the vehicle experiences the side collision. In this way, the load can be transmitted to a non-collision region, which is beneficial to improving the safety of the vehicle. Further, such an arrangement can also improve the torsional stiffness of the vehicle body.

In some embodiments of the present invention, the rear cross beam bottom wall 204 may have a third mounting portion. The third mounting portion is adapted to mount the battery pack 5. The third mounting portion may be constructed as a third mounting hole. The third mounting hole may extend through the rear cross beam bottom wall 204 in a thickness direction of the rear cross beam bottom wall 204. By enabling the connection member (e.g., the bolt) to extend through the third mounting portion and a mounting structure of the battery pack 5 and screwing the connection member to a nut disposed at the battery pack 5, the rear cross beam body 20 can be connected to the battery pack 5. Such an arrangement can enable a reliable connection between the rear cross beam body 20 and the battery pack 5.

In some embodiments of the present invention, the rear cross beam bottom wall 204 may have the third mounting portion, and the rear cross beam top wall 202 may have a fourth mounting portion corresponding to the third mounting portion. Each of the third mounting portion and the fourth mounting portion is adapted to mount the battery pack 5.

The third mounting portion may be constructed as the third mounting hole. The third mounting hole may extend through the rear cross beam bottom wall 204 in the thickness direction of the rear cross beam bottom wall 204. The fourth mounting portion may be constructed as a fourth mounting hole. The fourth mounting hole may extend through the rear cross beam top wall 202 in a thickness direction of the rear cross beam top wall 202. By enabling the connection member (e.g., the bolt) to extend through the fourth mounting portion, the third mounting portion, and the mounting structure of the battery pack 5, and screwing the connection member to a nut disposed at the battery pack 5, the rear cross beam body 20 can be connected to the battery pack 5. Such an arrangement can also enable the reliable connection between the rear cross beam body 20 and the battery pack 5. Further, difficulty in assembling the rear cross beam body 20 and the battery pack 5 can be reduced.

As some optional embodiments of the present invention, the rear cross beam body 20 and the battery pack 5 may be connected by a plurality of bolts. The plurality of bolts are arranged at intervals in the width direction of the vehicle (i.e., the Y direction illustrated in FIG. 18).

In some embodiments of the present invention, in the second direction (i.e., the vehicle height direction, i.e., the Z direction illustrated in FIG. 18), a spacing distance between the rear cross beam bottom wall 204 and the upper surface of the battery pack 5 may be F2, where F2 may satisfy a relationship: 5 mm≤F2≤11 mm. That is, D4 may be any value between 5 mm and 11 mm. For example, F2 may be, but is not limited to, 5 mm, 8 mm, 11 mm, etc. Such an arrangement can ensure the spacing distance between the rear cross beam bottom wall 204 and the battery pack 5 to be reasonable, which is beneficial to improving the torsional stiffness of the vehicle body.

In some embodiments of the present invention, as illustrated in FIG. 4 and FIG. 5, the vehicle body assembly 100 may further include a second mounting member 21. The second mounting member 21 may be disposed at the rear cross beam top wall 202, and is adapted to mount the front seat.

As some optional embodiments of the present invention, the second mounting member 21 may be disposed at the rear cross beam top wall 202 by means including, but not limited to, bolting or welding. In an exemplary embodiment of the present invention, the second mounting member 21 may be disposed at the outer surface of the rear cross beam top wall 202 (i.e., a surface of the rear cross beam top wall 202 away from the rear cross beam bottom wall 204). The second mounting member 21 may be used to mount the front seat. It should be understood that a height of the front seat can be adjusted through changing a Z-direction height of the second mounting member 21. In an exemplary embodiment of the present invention, when the height of the seat needs to be raised, the second mounting member 21 at a high Z-direction height may be used; when the height of the seat needs to be lowered, the second mounting member 21 at a low Z-direction height may be used.

Such an arrangement can enable the rear cross beam body 20 of a same size to be compatible with both vehicles requiring high seats and vehicles requiring low seats, allowing the rear cross beam body 20 of the same size to adapt to different vehicle models.

As some optional embodiments of the present invention, a plurality of second mounting members 21 may be provided. For example, four second mounting members 21 may be provided. The four second mounting members 21 may be arranged at intervals in the Y direction illustrated in FIG. 4, with every two second mounting members 21 used for mounting one seat.

As some optional embodiments of the present invention, as illustrated in FIG. 5, the second mounting member 21 may have a plurality of seventh connection flanges 211 and a plurality of eighth connection flanges 212. The plurality of seventh connection flanges 211 may be connected to the rear cross beam top wall 202 by means including, but not limited to, bolting or welding. A part of the plurality of eighth connection flanges 212 may be connected to the rear cross beam front side wall 203 by means including, but not limited to, bolting or welding, while another part of the plurality of eighth connection flanges 212 may be connected to the rear cross beam rear side wall 205 by means including, but not limited to, bolting or welding. Such an arrangement can lower difficulty of mounting the second mounting member 21 and enhance connection strength between the second mounting member 21 and the rear cross beam body 20.

As some optional embodiments of the present invention, a nut may be disposed in the second mounting member 21. The seat may be mounted at the second mounting member 21 through an engagement between the bolt and the nut.

As some optional embodiments of the present invention, as illustrated in FIG. 5, a top wall of the second mounting member 21 may have a second avoidance hole 213 to avoid the connection member (e.g., the bolt).

In some embodiments of the present invention, as illustrated in FIG. 16 and FIG. 17, the vehicle body assembly 100 may further include a sealing component 7 and a front bulkhead panel 621.

In the length direction of the main vehicle body 6, the front bulkhead panel 621 is located at a front side of the sealing component 7 and connected to the sealing component 7 to form an annular structure. At least part of the sealing component 7 is located between the main vehicle body 6 and the battery pack 5. As some optional embodiments of the present invention, a part of the sealing component 7 is located between the main vehicle body 6 and the battery pack 5. As some optional embodiments of the present invention, the sealing component 7 is located between the main vehicle body 6 and the battery pack 5. The sealing component 7 is capable of sealing a gap between the main vehicle body 6 and the battery pack 5.

At least part of the front bulkhead panel 621 is located between the main vehicle body 6 and the battery pack 5. As some optional embodiments of the present invention, a part of the front bulkhead panel 621 is located between the main vehicle body 6 and the battery pack 5. As some optional embodiments of the present invention, the front bulkhead panel 621 is located between the main vehicle body 6 and the battery pack 5. The front bulkhead panel 621 is capable of sealing the gap between the main vehicle body 6 and the battery pack 5.

It should be explained that, since the battery pack 5 is configured to constitute at least part of the floor of the vehicle body assembly 100, the gap may exist between the battery pack 5 and the main vehicle body 6. The gap between the battery pack 5 and the main vehicle body 6 brings the occupant compartment into communication with an ambient environment, which causes passengers in the occupant compartment to experience significant noise, vibration, etc., and also allows a large amount of dust to enter the occupant compartment through the gap between the battery pack 5 and the main vehicle body 6, affecting the riding comfort for passengers. By sealing the gap between the main vehicle body 6 and the battery pack 5 with the sealing component 7 and the front bulkhead panel 621, airtightness of the occupant compartment can be improved. Therefore, the noise and the vibration felt by passengers in the occupant compartment can be reduced, and a large amount of dust can be prevented from entering the occupant compartment through the gap between the battery pack 5 and the main vehicle body 6, which is conducive to improving riding comfort of the vehicle.

In addition, by connecting the sealing component 7 and the front bulkhead panel 621 to form the annular structure, the gap between the main vehicle body 6 and the battery pack 5 can be reliably sealed to improve the airtightness of the occupant compartment, which is conducive to improving the riding comfort of the vehicle.

In some embodiments of the present invention, as illustrated in FIG. 18 and FIG. 19, the sealing component 7 may be located in the mounting opening 61. In a height direction of the main vehicle body 6 (i.e., the Z direction illustrated in FIG. 18), a distance between the sealing component 7 and an upper end of the mounting opening 61 may be smaller than a distance between the sealing component 7 and a lower end of the mounting opening 61.

By disposing the sealing component 7 in the mounting opening 61, the sealing component 7 can be reasonably positioned. In addition, by setting the sealing component 7 such that the distance between the sealing component 7 and the upper end of the mounting opening 61 is smaller than the distance between the sealing component 7 and the lower end of the mounting opening 61, the sealing component 7 may be located at a middle-upper part of the mounting opening 61 to provide more space for the battery pack 5, which is beneficial for increasing a battery capacity of the battery pack 5, helping increase the driving range of the vehicle.

As some optional embodiments of the present invention, the battery pack 5 may serve as a front floor of the vehicle body assembly 100.

In some embodiments of the present invention, as illustrated in FIG. 16 and FIG. 17, the sealing component 7 may have a third avoidance hole 71. That is, the sealing component 7 may have a hollow structure. The third avoidance hole 71 of the sealing component 7 may be arranged corresponding to the mounting opening 61. The battery pack 5 can cover the third avoidance hole 71. Also, the battery pack 5 can cover the mounting opening 61 of the main vehicle body 6. By forming the third avoidance hole 71 at the sealing component 7, a weight of the sealing component 7 can be reduced, which is conducive to the lightweight design of the vehicle. In addition, the third avoidance hole 71 can also avoid the upper surface of the battery pack 5 to ensure that the battery pack 5 can be configured as at least part of the floor of the vehicle body assembly 100.

In some embodiments of the present invention, as illustrated in FIG. 18 and FIG. 19, in the height direction of the main vehicle body 6 (i.e., the Z direction illustrated in FIG. 18), the battery pack 5 may be disposed below the sealing component 7, and the battery pack 5 may be sealed with a lower surface of the sealing component 7. As some optional embodiments of the present invention, the upper surface of the battery pack 5 may be sealed with the lower surface of the sealing component 7. Such an arrangement can make a relative position between the sealing component 7 and the battery pack 5 reasonable, which is beneficial for improving sealing effectiveness of the sealing component 7.

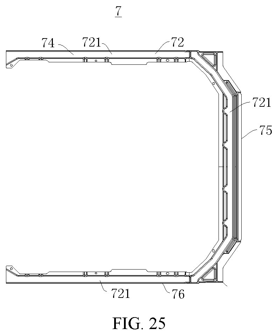

In some embodiments of the present invention, as illustrated in FIG. 16, FIG. 17, and FIG. 25, each of the sealing component 7 and the front bulkhead panel 621 may be provided with a sealing protrusion 721 protruding towards the battery pack 5. The sealing protrusion 721 may protrude downwards (i.e., towards the battery pack 5) in the height direction of the main vehicle body 6 (i.e., the Z direction illustrated in FIG. 18). The sealing protrusion 721 of the sealing component 7 may be engaged with the sealing protrusion 721 of the front bulkhead panel to form a protrusion structure 72 of an annular shape.

A lower surface of the sealing protrusion 721 may be sealed with the battery pack 5. As some optional embodiments of the present invention, the lower surface of the sealing protrusion 721 may be sealed with the upper surface of the battery pack 5. Providing each of the sealing component 7 and the front bulkhead panel 621 with the sealing protrusion 721 protruding towards the battery pack 5 is conducive to further improving sealing effectiveness of the sealing component 7 and the front bulkhead panel 621.

In some embodiments of the present invention, as illustrated in FIG. 16, FIG. 17, and FIG. 20 to FIG. 25, the sealing component 7 may include a left seal 74, a rear seal 75, and a right seal 76. The left seal 74 and the right seal 76 may be arranged opposite to and spaced apart from each other in a width direction of the main vehicle body 6. The front bulkhead panel 621, the left seal 74, the rear seal 75, and the right seal 76 may be sequentially connected end to end.

In an exemplary embodiment of the present invention, the front bulkhead panel 621 has an end that may be connected to an end of the left seal 74, the left seal 74 has another end that may be connected to an end of the rear seal 75, the rear seal 75 has another end that may be connected to an end of the right seal 76, and the right seal 76 has another end that may be connected to another end of the front bulkhead panel 621. At least one of the left seal 74, the rear seal 75, and the right seal 76 may be connected to the main vehicle body 6. As some optional embodiments of the present invention, each of the left seal 74, the rear seal 75, and the right seal 76 may be connected to the main vehicle body 6.

Each of the left seal 74, the rear seal 75, and the right seal 76 may be provided with a part of the protrusion structure 72. In an exemplary embodiment of the present invention, as illustrated in FIG. 20 to FIG. 25, each of the front bulkhead panel 621, the left seal 74, the rear seal 75, and the right seal 76 may be provided with the sealing protrusion 721 protruding towards the battery pack 5. The sealing protrusion 721 of any one of the front bulkhead panel 621, the left seal 74, the rear seal 75, and the right seal 76 may be a part of the protrusion structure 72. The protrusion structure 72 may be formed by the sealing protrusion 721 of the front bulkhead panel 621, the sealing protrusion 721 of the left seal 74, the sealing protrusion 721 of the rear seal 75, and the sealing protrusion 721 of the right seal 76 together.

Such an arrangement can enable a structural form of the sealing component 7 and the front bulkhead panel 621 to be reasonable. In addition, by enabling the at least one of the left seal 74, the rear seal 75, and the right seal 76 to be connected to the main vehicle body 6, the sealing component 7 can be firmly connected to the main vehicle body 6. Also, providing each of the front bulkhead panel 621, the left seal 74, the rear seal 75, and the right seal 76 with the protrusion structure 72 is conducive to further improving the sealing effectiveness of the sealing component 7 and the front bulkhead panel 621.

As some optional embodiments of the present invention, the left seal 74, the rear seal 75, and the right seal 76 may be integrally formed. As some optional embodiments of the present invention, the left seal 74, the rear seal 75, and the right seal 76 may be separately formed.

In some embodiments of the present invention, as illustrated in FIG. 18 and FIG. 19, the battery pack 5 may have a sealing surface 54, and the lower surface of the sealing protrusion 721 may be adapted to the sealing surface 54. As some optional embodiments of the present invention, each of the front bulkhead panel 621, the left seal 74, the rear seal 75, and the right seal 76 may be provided with the sealing protrusion 721 protruding towards the battery pack 5. Lower surfaces of the sealing protrusions 721 of the front bulkhead panel 621, the left seal 74, the rear seal 75, and the right seal 76 may lie in a same plane. The upper surface of the battery pack 5 may be constructed as the sealing surface 54. The sealing surface 54 may be adapted to the lower surface of the sealing protrusion 721. For example, the sealing surface 54 may be parallel to the lower surface of the sealing protrusion 721. Such an arrangement can improve sealing performance between the sealing protrusion 721 and the battery pack 5. Therefore, the sealing component 7 and the front bulkhead panel 621 can reliably seal the gap between the main vehicle body 6 and the battery pack 5, improving the airtightness of the occupant compartment.

In some embodiments of the present invention, as illustrated in FIG. 18 and FIG. 19, the vehicle body assembly 100 may further include a flexible seal 55. The flexible seal 55 may be sandwiched between the battery pack 5 and the sealing component 7. In an exemplary embodiment of the present invention, the flexible seal 55 may be sandwiched between the sealing protrusion 721 and the battery pack 5. By disposing the flexible seal 55 between the battery pack 5 and the sealing component 7, the flexible seal 55 is compressed by the battery pack 5 and the sealing component 7. Thus, satisfactory sealing effectiveness is provided by the compressed flexible seal 55.

As some optional embodiments of the present invention, each of the sealing component 7 and the front bulkhead panel 621 may be provided with the sealing protrusion 721 protruding towards the battery pack 5. The lower surface of the sealing protrusion 721 may be sealed with the upper surface of the battery pack 5. The flexible seal 55 may be sandwiched between the upper surface of the battery pack 5 and the lower surface of the sealing protrusion 721. With the flexible seal 55, the airtightness of the occupant compartment can be further improved, further improving the riding comfort of the vehicle.

In some embodiments of the present invention, as illustrated in FIG. 16 and FIG. 17, the main vehicle body 6 may include a front compartment 62, a rear floor 63, a left side sill beam 47, and a right side sill beam 48. The front compartment 62 may be connected to the left side sill beam 47 and the right side sill beam 48. The rear floor 63 may be connected to the left side sill beam 47 and the right side sill beam 48. In the length direction of the vehicle (i.e., the X direction illustrated in FIG. 16), the front compartment 62 may be disposed in front of the rear floor 63. Both the left side sill beam 47 and the right side sill beam 48 may be disposed between the front compartment 62 and the rear floor 63 and extend in the length direction of the vehicle. In the width direction of the vehicle (i.e., the Y direction illustrated in FIG. 16), the left side sill beam 47 may be spaced apart from the right side sill beam 48. The mounting opening 61 is defined by the front compartment 62, the rear floor 63, the left side sill beam 47, and the right side sill beam 48 together. Such an arrangement can allow for a large size of the mounting opening 61, contributing to the lightweight design of the vehicle. In addition, through defining the mounting opening 61 by the front compartment 62, the rear floor 63, the left side sill beam 47, and the right side sill beam 48 together, the mounting opening 61 can be reasonably positioned. Thus, the battery pack 5 can be reasonably positioned, reducing an impact of the battery pack 5 on a trunk space of the vehicle.

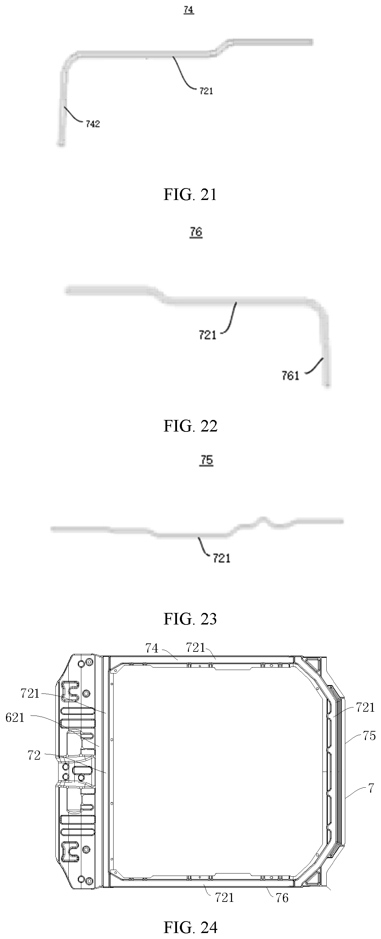

In some embodiments of the present invention, as illustrated in FIG. 16 and FIG. 17, the left seal 74 may be connected to the left side sill beam 47. As some optional embodiments of the present invention, the left seal 74 may be disposed at a side of the left side sill beam 47 close to the right side sill beam 48. The left seal 74 may have a left connection flange 742 (as illustrated in FIG. 21). The left connection flange 742 may be welded to the left side sill beam 47. The right seal 76 may be connected to the right side sill beam 48. As some optional embodiments of the present invention, the right seal 76 may be disposed at a side of the right side sill beam 48 close to the left side sill beam 47. The right seal 76 may have a right connection flange 761 (as illustrated in FIG. 22). The right connection flange 761 may be welded to the right side sill beam 48. The front bulkhead panel 621 may be connected to the front compartment 62. The rear seal 75 may be connected to the rear floor 63. Such an arrangement can enhance connection strength between the sealing component 7 and the main vehicle body 6 to reduce a probability of the sealing component 7 detaching from the main vehicle body 6, reliably sealing the gap between the main vehicle body 6 and the battery pack 5.

As some optional embodiments of the present invention, the sealing component 7 may be connected to the main vehicle body 6 by means of welding.

As some optional embodiments of the present invention, each of the left side and the right side of the battery pack 5 may be connected to the side sill beam 4, a front side of the battery pack 5 may be connected to a bottom of the front bulkhead panel of the vehicle, and a rear side of the battery pack 5 may be connected to the rear floor 63 of the vehicle. As some optional embodiments of the present invention, the battery pack 5 and the main vehicle body 6 may be connected by a bolt.

In some embodiments of the present invention, as illustrated in FIG. 16 to FIG. 19, the vehicle body assembly 100 may further include a seat mounting cross beam 199. In the height direction of the main vehicle body 6 (i.e., the Z direction illustrated in FIG. 18), the seat mounting cross beam 199 may be disposed above the sealing component 7 and may be welded to the sealing component 7. As some optional embodiments of the present invention, the seat mounting cross beam 199 extends in the width direction of the main vehicle body 6 (i.e., the Y direction illustrated in FIG. 18). Two ends of the seat mounting cross beam 199 may be welded to the left seal 74 and the right seal 76, respectively.

The battery pack 5 may be connected to the seat mounting cross beam 199. It should be understood that, in the height direction of the main vehicle body 6 (i.e., the Z direction illustrated in FIG. 18), the seat mounting cross beam 199 may be disposed above the battery pack 5. The battery pack 5 and the seat mounting cross beam 199 may be connected by a bolt. As some optional embodiments of the present invention, the battery pack 5 and the seat mounting cross beam 199 may be connected by a plurality of bolts. The plurality of bolts may be arranged at intervals in the width direction of the main vehicle body 6 (i.e., the Y direction illustrated in FIG. 18). By connecting the battery pack 5 to the seat mounting cross beam 199, the mounting stability of the battery pack 5 can be improved to prevent the battery pack 5 from detaching from the vehicle. In addition, when the vehicle experiences the side collision, the seat mounting cross beam 199 and the battery pack 5 can form at least two load transmission paths. In this way, a side collision load can be transmitted to the non-collision region, which improves impact resistance capability of the vehicle and the torsional stiffness of the vehicle body.

As some optional embodiments of the present invention, the battery pack 5 may be connected to the rear cross beam for front seat mounting 2.

As some optional embodiments of the present invention, in the length direction of the vehicle (i.e., the X direction illustrated in FIG. 16), the seat mounting cross beam 199 is located between the front compartment 62 and the rear floor 63.

In some embodiments of the present invention, as illustrated in FIG. 16 and FIG. 17, the sealing component 7 may include a connection arm 741 protruding towards an inner side of the sealing component 7. The connection arm 741 may be connected to the seat mounting cross beam 199. In an exemplary embodiment of the present invention, the connection arm 741 may be welded to the seat mounting cross beam 199. As some optional embodiments of the present invention, the connection arm 741 may be welded to a bottom of the seat mounting cross beam 199. It should be noted that, when the vehicle experiences the side collision, a connection between the seat mounting cross beam 199 and the sealing component 7 serves as a primary force-bearing point. By providing the sealing component 7 with the connection arm 741 protruding towards the inner side of the sealing component 7 and connecting the connection arm 741 to the seat mounting cross beam 199, connection strength at the connection between the seat mounting cross beam 199 and the sealing component 7 can be enhanced to improve the impact resistance capability of the vehicle, improving the safety of the vehicle.

In some embodiments of the present invention, as illustrated in FIG. 16 and FIG. 17, the sealing component 7 may include the left seal 74, the rear seal 75, and the right seal 76. Each of the left seal 74 and the right seal 76 may be connected to the rear seal 75. In an exemplary embodiment of the present invention, the front bulkhead panel 621 has an end that may be connected to an end of the left seal 74, the left seal 74 has another end that may be connected to an end of the rear seal 75, the rear seal 75 has another end that may be connected to an end of the right seal 76, and the right seal 76 has another end that may be connected to another end of the front bulkhead panel 621.

The left seal 74 may include the connection arm 741. In the width direction of the vehicle (i.e., the Y direction illustrated in FIG. 16), the connection arm 741 of the left seal 74 may extend towards the right seal 76. In some embodiments of the present invention, the right seal 76 may include the connection arm 741. In the width direction of the vehicle (i.e., the Y direction illustrated in FIG. 16), the connection arm 741 of the right seal 76 may extend towards the left seal 74. In some embodiments of the present invention, the left seal 74 and the right seal 76 may include the connection arms 741 extending towards each other. It should be understood that the seat mounting cross beam 199 may be connected to the left seal 74 and the right seal 76. By providing each of the left seal 74 and the right seal 76 with the connection arm 741 and connecting the connection arm 741 to the seat mounting cross beam 199, connection strength between the seat mounting cross beam 199 and each of the left seal 74 and the right seal 76 can be enhanced, which can reduce a risk of cracking at a connection between the seat mounting cross beam 199 and each of the left seal 74 and the right seal 76, improving the safety of the vehicle.

In some embodiments of the present invention, as illustrated in FIG. 16, a length of the connection arm 741 may be J1, where J1 may satisfy a relationship: 60 mm≤J1≤100 mm. That is, the length of the connection arm 741 may be any value between 60 mm and 100 mm. For example, the length of the connection arm 741 may be, but is not limited to, 60 mm, 80 mm, 100 mm, etc. It should be explained that the length of the connection arm 741 is measured in the width direction of the vehicle (i.e., the Y direction illustrated in FIG. 16). Such an arrangement can enable the length of the connection arm 741 to be reasonable, which can reliably enhance the connection strength between the left seal 74 and/or the right seal 76 and the seat mounting cross beam 199, reducing the risk of cracking at the connection between the seat mounting cross beam 199 and each of the left seal 74 and the right seal 76.

It should be noted that, in the vehicle body assembly 100, many components are not completely regular in shape. Therefore, a dimension of an irregularly shaped component can be understood as a dimension of any part of the irregularly shaped component in a determined direction. Additionally, a distance between the irregularly shaped component and another component can be understood as a distance between any parts of the irregularly shaped component and the other component in a determined direction.

As some optional embodiments of the present invention, as illustrated in FIG. 1, a distance between the front cross beam body 10 and the front seal 73 may be D5, where D5 may be any value between 260 mm and 298 mm. As illustrated in FIG. 4, a distance between the rear cross beam body 20 and the front seal 73 may be F3. F3 may be any value between 620 mm and 680 mm. Such an arrangement can enable the distance between the front cross beam body 10 and the front seal 73 to be reasonable and enable the distance between the rear cross beam body 20 and the front seal 73 to be reasonable.

A vehicle according to the embodiments of the present invention includes the above-mentioned vehicle body assembly 100. By configuring the battery pack 5 to form the at least part of the floor of the vehicle body assembly 100, the part of the floor of the conventional vehicle body can be omitted, which is conducive to the lightweight design of the vehicle and helps increase the driving range of the vehicle. Further, by arranging the at least part of each of the plurality of seat mounting cross beams 199 in the mounting opening 61 and enabling the at least one of the plurality of seat mounting cross beams 199 to define the plurality of cavities, the enhancement of the structural strength of the vehicle body assembly 100 can be facilitated, helping improve the safety of the vehicle.

In the description of the present invention, it should be understood that, the orientation or the position indicated by terms such as "center", "longitudinal", "transverse", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the present invention and simplifying the description, rather than indicating or implying that the pointed device or element must have a specific orientation, or be constructed and operated in a specific orientation, and therefore cannot be understood as a limitation of the present invention.

In the description of the present invention, "first feature" and "second feature" may include one or more of these features.

In the description of the present invention, "plurality" means two or more.

In the description of the present invention, the first feature "on" or "under" the second feature may mean that the first feature is in direct contact with the second feature, or the first and second features are in indirect contact through another feature between them.

In the description of the present invention, the first feature "above" the second feature means that the first feature is directly above or obliquely above the second feature, or simply means that the level of the first feature is higher than that of the second feature.

Reference throughout this specification to "an embodiment", "some embodiments", "illustrative embodiments", "an example", "a specific example", or "some examples" means that a particular feature, structure, material, or characteristic described in connection with the embodiment or example is included in at least one embodiment or example of the present invention. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present invention have been illustrated and described, it is conceivable for those skilled in the art that various changes, modifications, replacements, and variations can be made to these embodiments without departing from the principles and spirit of the present invention. The scope of the present invention shall be defined by the claims as appended and their equivalents.

## Claims

1. A vehicle body assembly of a vehicle, the vehicle body assembly comprising:
a main vehicle body having a mounting opening;
a battery pack disposed at the main vehicle body and covering the mounting opening, wherein the battery pack is configured to form at least part of a floor of the vehicle body assembly; and
a plurality of seat mounting cross beams, wherein at least part of each of the plurality of seat mounting cross beams is located in the mounting opening and connected to the main vehicle body, and wherein a plurality of cavities are defined by at least one of the plurality of seat mounting cross beams.

2. The vehicle body assembly of the vehicle according to claim 1, wherein the main vehicle body comprises:
a side sill beam, wherein a receiving cavity is defined by the side sill beam; and
a reinforcement beam disposed in the receiving cavity and fixedly disposed at the side sill beam, wherein in a first direction of the main vehicle body, an overlapping region exists between an orthographic projection of the reinforcement beam and an orthographic projection of the seat mounting cross beam.

3. The vehicle body assembly of the vehicle according to claim 2, wherein in the first direction, an overlapping region exists between the orthographic projection of the reinforcement beam and an orthographic projection of the battery pack.

4. The vehicle body assembly of the vehicle according to claim 2 or 3, wherein in the first direction, the side sill beam is spaced apart from the battery pack to form an assembly space for mounting a component.

5. The vehicle body assembly of the vehicle according to claim 4, wherein the battery pack has a battery pack connection portion,
wherein in a second direction of the main vehicle body, the battery pack connection portion is located below the assembly space to cover an open end of the assembly space, the second direction being perpendicular to the first direction.

6. The vehicle body assembly of the vehicle according to any one of claims 2 to 5, wherein the battery pack has a plurality of battery pack connection portions, each of the plurality of battery pack connection portions being connected to a corresponding side sill beam.

7. The vehicle body assembly of the vehicle according to any one of claims 2 to 6, wherein in the first direction, the reinforcement beam is spaced apart from an inner side wall of the receiving cavity.

8. The vehicle body assembly of the vehicle according to any one of claims 2 to 7, wherein:
the plurality of seat mounting cross beams comprise a front cross beam for front seat mounting and a rear cross beam for front seat mounting, the front cross beam for front seat mounting and the rear cross beam for front seat mounting being spaced apart from each other in a third direction of the main vehicle body; and
the reinforcement beam extends in the third direction and has a first end and a second end opposite to the first end,
wherein in the third direction, the first end is spaced apart from the front cross beam for front seat mounting and the second end is spaced apart from the rear cross beam for front seat mounting, the third direction being perpendicular to the first direction.

9. The vehicle body assembly of the vehicle according to claim 8, wherein the rear cross beam for front seat mounting comprises a rear cross beam body defining a plurality of rear cross beam cavities, the plurality of rear cross beam cavities being arranged in the third direction, and at least two adjacent rear cross beam cavities of the plurality of rear cross beam cavities being spaced apart from each other.

10. The vehicle body assembly of the vehicle according to claim 8 or 9, wherein the rear cross beam for front seat mounting comprises a rear cross beam bottom wall and a rear cross beam top wall opposite to the rear cross beam bottom wall,
wherein the rear cross beam bottom wall has at least one recess recessed towards the rear cross beam top wall, the at least one recess being connected to the rear cross beam top wall to allow the plurality of rear cross beam cavities to be defined by the rear cross beam body.

11. The vehicle body assembly of the vehicle according to any one of claims 1 to 10, further comprising a sealing component and a front bulkhead panel, wherein:
in a third direction of the main vehicle body, the front bulkhead panel is located at a front side of the sealing component, and connected to the sealing component to form an annular structure; and
at least part of the sealing component and at least part of the front bulkhead panel are located between the main vehicle body and the battery pack to seal a gap between the main vehicle body and the battery pack.

12. The vehicle body assembly of the vehicle according to claim 11, wherein each of the sealing component and the front bulkhead panel is provided with a sealing protrusion protruding towards the battery pack, wherein:
the sealing protrusion of the sealing component is engaged with the sealing protrusion of the front bulkhead panel to form a protrusion structure of an annular shape; and
a lower surface of the sealing protrusion is sealed with the battery pack.

13. The vehicle body assembly of the vehicle according to claim 12, wherein the sealing component comprises a left seal, a right seal, and a rear seal, wherein:
the left seal and the right seal are arranged opposite to and spaced apart from each other in the first direction of the main vehicle body, the first direction being perpendicular to the third direction;
the front bulkhead panel, the left seal, the rear seal, and the right seal are sequentially connected end to end;
at least one of the left seal, the rear seal, and the right seal is connected to the main vehicle body; and
each of the left seal, the rear seal, and the right seal is provided with a part of the protrusion structure.

14. The vehicle body assembly of the vehicle according to claim 13, wherein the main vehicle body comprises a front compartment, a rear floor, a left side sill beam, and a right side sill beam, wherein:
the mounting opening is defined by the front compartment, the rear floor, the left side sill beam, and the right side sill beam together; and
the left seal is connected to the left side sill beam, the right seal is connected to the right side sill beam, the front bulkhead panel is connected to the front compartment, and the rear seal is connected to the rear floor.

15. The vehicle body assembly of the vehicle according to any one of claims 11 to 14, wherein in a second direction of the main vehicle body, the plurality of seat mounting cross beams are disposed above the sealing component and connected to the sealing component, and the battery pack is connected to the plurality of seat mounting cross beams.

16. The vehicle body assembly of the vehicle according to any one of claims 11 to 15, wherein:
the sealing component is located in the mounting opening; and
in a second direction of the main vehicle body, a distance between the sealing component and an upper end of the mounting opening is smaller than a distance between the sealing component and a lower end of the mounting opening.

17. A vehicle, comprising the vehicle body assembly of the vehicle according to any one of claims 1 to 16.
